(19) Europäisches Patentamt
European Patent Office
Office européen des brevets

(11) EP 4 375 697 A1

(12) EUROPEAN PATENT APPLICATION
published in accordance with Art. 153(4) EPC

(43) Date of publication:
29.05.2024 Bulletin 2024/22

(51) International Patent Classification (IPC):
G01S 7/03 (2006.01)    H01Q 17/00 (2006.01)
H05K 9/00 (2006.01)    G01S 13/931 (2020.01)

(21) Application number: 22845968.1

(52) Cooperative Patent Classification (CPC):
G01S 7/03; H01Q 17/00; H05K 9/00; G01S 13/931

(22) Date of filing: 20.07.2022

(86) International application number:
PCT/JP2022/028282

(87) International publication number:
WO 2023/003035 (26.01.2023 Gazette 2023/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.07.2021 JP 2021121073

(71) Applicant: NITTO DENKO CORPORATION
Ibaraki-shi
Osaka 567-8680 (JP)

(72) Inventors:
• UI Takehiro
Ibaraki-shi, Osaka 567-8680 (JP)
• FUKE Kazuhiro
Ibaraki-shi, Osaka 567-8680 (JP)
• MATSUZAKI Yuya
Ibaraki-shi, Osaka 567-8680 (JP)
• AKIYAMA Kyohei
Ibaraki-shi, Osaka 567-8680 (JP)

(74) Representative: Grünecker Patent- und
Rechtsanwälte
PartG mbB
Leopoldstraße 4
80802 München (DE)

(54) **ELECTROMAGNETIC WAVE SHIELD**

(57) An electromagnetic shield 1a includes a plate-shaped base 5 and first projecting portions 11. The base 5 has a first surface 10 and a second surface 20, the first surface 10 being configured to allow an electromagnetic wave to be incident on the first surface 10. The second surface 20 is distant from the first surface 10 and extends along the first surface 10. The electromagnetic shield 1a includes a dielectric. In the electromagnetic shield 1a, at least one of the first projecting portions 11 has a side 11s including a first point S1 and a second point S2, the side 11s makes different inclination angles with a projecting direction of the first projecting portion 11 at the first point S1 and the second point S2. In the projecting direction of the first projecting portion 11, the second point S2 is closer to the first surface 10 than the first point S1 is. On the side 11s, an inclination angle β is greater than an inclination angle α.

FIG.1B

EP 4 375 697 A1

**Description**

TECHNICAL FIELD

The present invention relates to an electromagnetic shield.

BACKGROUND ART

Sensing systems using radio waves have been known. For example, collision avoidance systems including a radar using a radio wave with a given wavelength are under discussion in the automotive technical field. Such collision avoidance systems, for example, detect obstacles, measure the speed of nearby vehicles, measure a distance to a nearby vehicle, and adjust the speed of a vehicle equipped with the system and a vehicle-to-vehicle distance. For normal operation, it is important for a collision avoidance system not to receive unnecessary radio waves that can be noise.

Patent Literature 1 describes the use of an electromagnetic wave absorber for absorption of unnecessary electromagnetic waves that can cause a driver-assistance system to malfunction. In the electromagnetic wave absorber described in Patent Literature 1, scattering bodies made of a second dielectric material and each having a particular shape are cyclically arranged in a matrix made of a first dielectric material.

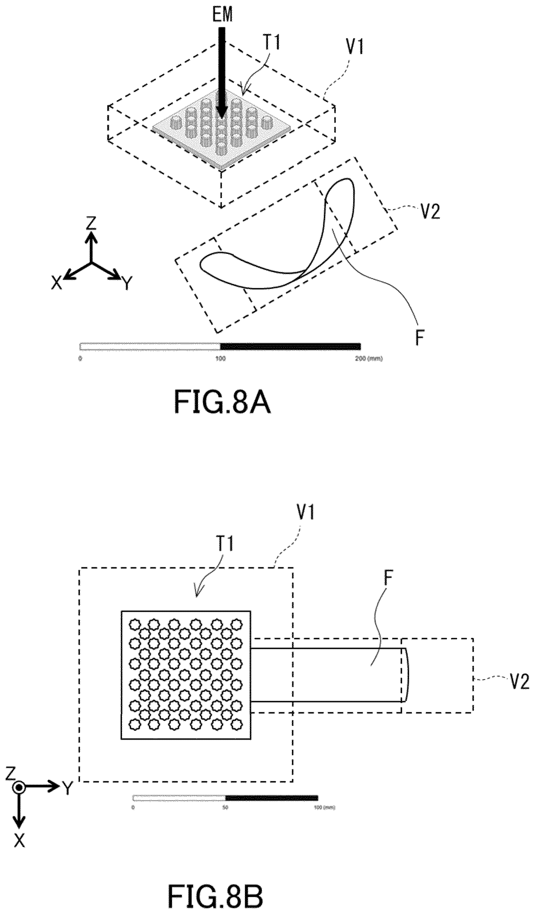

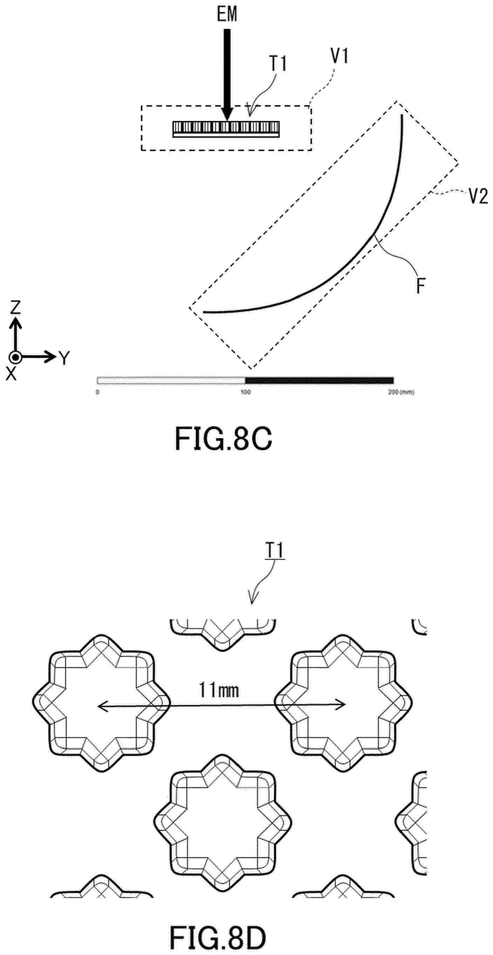

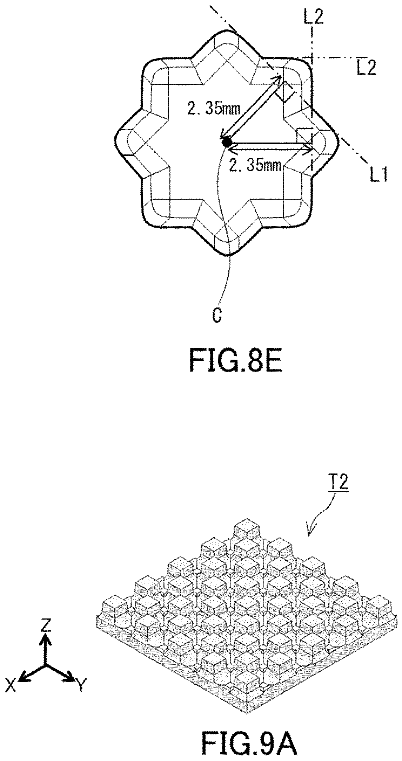

Patent Literature 2 describes a radar device attached to and supported by a rear bumper using an attaching member (refer to FIG. 8). The attaching member includes a box-shaped housing, and the housing includes a shield plate. The shield plate closes a path between a vehicle-widthwise outer side portion of the radar device and a backside of a rear bumper to block a transmission wave. The shield plate is provided as a misdetection prevention member to close a path of a tire arrival wave $\alpha$, so that misdetection is prevented. Patent Literature 2 describes a misdetection prevention member including a diffused reflection structure including irregularities in a given shape (refer to FIG. 13). It is understood that the diffused reflection structure diffusely reflects an incident wave from a radar device to disperse the energy of the incident wave, thereby preventing misdetection.

Patent Literature 3 describes an automotive radar module (refer to FIG. 7B). This automotive radar module is configured to reduce multipath effects by one or more patterned surfaces of a shield, a mounting fixing device, or a bracket.

Patent Literature 4 describes a side shield for radar transceivers. A non-uniform delay structure is arranged over the side shield. The non-uniform delay structure delays a radar signal propagating through the side shield by a variable amount depending on the wavelength of the radar signal and where in the side shield the radar signal propagates. The radar signal is thereby steered and diffused after propagation through the side shield.

CITATION LIST

Patent Literature

    Patent Literature 1: JP 2004-153135 A
    Patent Literature 2: JP 5696781 B2
    Patent Literature 3: US 10,074,907 B2
    Patent Literature 4: WO 2021/058450 A1

SUMMARY OF INVENTION

Technical Problem

Electromagnetic shielding is conceivable for prevention of reception of unnecessary radio waves. A projecting portion may be formed on an electromagnetic shield to impart such an electromagnetic shielding function to the electromagnetic shield. In the above patent literatures, creation of a void inside a projecting portion in manufacturing of electromagnetic shields is not expected, and a relation between such a void and the electromagnetic shielding performance is unclear.

In view of such circumstances, the present invention provides an electromagnetic shield advantageous in electromagnetic shielding in that it is less likely that a void is created in a projecting portion of the electromagnetic shield due to circumstances in manufacturing.

Solution to Problem

The present invention provides an electromagnetic shield including:

a plate-shaped base having a first surface and a second surface, the first surface being configured to allow an electromagnetic wave to be incident on the first surface, the second surface being distant from the first surface and extending along the first surface; and
at least one selected from the group consisting of a plurality of first projecting portions projecting from the first surface in a direction away from the second surface and a plurality of second projecting portions projecting from the second surface in a direction away from the first surface, wherein
the electromagnetic shield includes a dielectric, and
at least one selected from the group consisting of the following requirements (I-1), (I-2), (II-1), (II-2), (III-1), and (III-2) is satisfied:

(I-1) at least one of the first projecting portions has a side including a first point and a second point, the side makes different inclination angles with a projecting direction of the first projecting portion at the first point and the second point, the second point is closer to the first surface in the projecting direction of the first projecting portion than the first point is, and the inclination angle at the second point is greater than the inclination angle at the first point;
(I-2) at least one of the second projecting portions has a side including a third point and a fourth point, the side makes different inclination angles with a projecting direction of the second projecting portion at the third point and the fourth point, the fourth point is closer to the second surface in the projecting direction of the second projecting portion than the third point is, and the inclination angle at the fourth point is greater than the inclination angle at the third point;
(II-1) the electromagnetic shield further includes a first coupling portion coupling at least a pair of the first projecting portions adjacent to each other, and a width $d_{1i}$ of the first coupling portion is smaller than a width $w_{1i}$ of the first projecting portion coupled by the first coupling portion, the first coupling portion projecting from the first surface in the direction away from the second surface;
(II-2) the electromagnetic shield further includes a second coupling portion coupling at least a pair of the second projecting portions adjacent to each other, and a width $d_{2i}$ of the second coupling portion is smaller than a width $w_{2i}$ of the second projecting portion coupled by the second coupling portion, the second coupling portion projecting from the second surface in the direction away from the first surface;
(III-1) at least one of the first projecting portions has a first auxiliary projecting portion projecting from a surface of the first projecting portion; and
(III-2) at least one of the second projecting portions has a second auxiliary projecting portion projecting from a surface of the second projecting portion.

Advantageous Effects of Invention

The above electromagnetic shield is advantageous in electromagnetic shielding in that it is less likely that a void is created in a projecting portion due to circumstances in manufacturing.

BRIEF DESCRIPTION OF DRAWINGS

FIG. 1A is a perspective view showing an example of the electromagnetic shield according to the present invention.
FIG. 1B is a side view of a first projecting portion of the electromagnetic shield shown in FIG. 1A.
FIG. 1C is a side view of the electromagnetic shield shown in FIG. 1A.
FIG. 2A is a perspective view of another example of the electromagnetic shield according to the present invention.
FIG. 2B is a side view of the electromagnetic shield shown in FIG. 2A.
FIG. 3A is a cross-sectional view of yet another example of the electromagnetic shield according to the present invention.
FIG. 3B is a plan view of the electromagnetic shield shown in FIG. 3A.
FIG. 3C is a plan view of a first projecting portion of the electromagnetic shield shown in FIG. 3A.
FIG. 4A is a plan view of an example of the radar cover according to the present invention.
FIG. 4B is a cross-sectional view of the radar cover shown in FIG. 4A along a line IV-IV.
FIG. 5 is a plan view of another example of the radar cover according to the present invention.

FIG. 6A is a perspective view of an example of a computation model for flow analysis.

FIG. 6B is a perspective view of another example of a computation model for flow analysis.

FIG. 6C is a perspective view of yet another example of a computation model for flow analysis.

FIG. 6D is a perspective view of yet another example of a computation model for flow analysis.

FIG. 6E is a perspective view of yet another example of a computation model for flow analysis.

FIG. 6F is a perspective view of a portion that every computation model for flow analysis has.

FIG. 7A shows examples of flow analysis results.

FIG. 7B shows another example of a flow analysis result.

FIG. 7C shows yet another example of a flow analysis result.

FIG. 8A is a perspective view of an example of a computation model for electromagnetic field analysis.

FIG. 8B is a plan view of an example of a computation model for electromagnetic field analysis.

FIG. 8C is a side view of an example of a computation model for electromagnetic field analysis.

FIG. 8D is a plan view of a target T1 in the computation model shown in FIG. 8A.

FIG. 8E is a plan view of a projecting portion of the target T1.

FIG. 9A is a perspective view of a target T2 in another example of a computation model for electromagnetic field analysis.

FIG. 9B is a plan view of the target T2.

FIG. 9C is a side view of the target T2.

FIG. 9D is a side view of a portion of the target T2.

FIG. 10A is a perspective view of a target T3 in yet another example of a computation model for electromagnetic field analysis.

FIG. 10B is a side view of the target T3.

DESCRIPTION OF EMBODIMENTS

Hereinafter, embodiments of the present invention will be described with reference to the drawings. The present invention is not limited to the following embodiments.

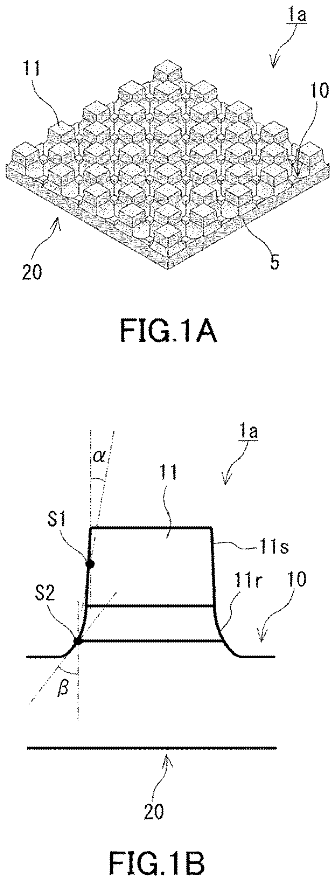

As shown in FIG. 1A, an electromagnetic shield 1a includes a plate-shaped base 5 and a plurality of first projecting portions 11. The base 5 has a first surface 10 and a second surface 20, the first surface 10 being configured to allow an electromagnetic wave to be incident on the first surface 10. The second surface 20 is distant from the first surface 10 and extends along the first surface 10. The electromagnetic shield 1a includes a dielectric. As shown in FIG. 1B, in the electromagnetic shield 1a, at least one of the first projecting portions 11 has a side 11s including a first point S1 and a second point S2, and the side 11s makes different inclination angles with a projecting direction of the first projecting portion 11 at the first point S1 and the second point S2. In the projecting direction of the first projecting portion 11, the second point S2 is closer to the first surface 10 than the first point S1 is. Additionally, on the side 11s, an inclination angle $\beta$ is greater than an inclination angle $\alpha$. The inclination angle $\alpha$ is an inclination angle made by the side 11s with the projecting direction of the first projecting portion 11 at the first point S1. The inclination angle $\beta$ is an inclination angle made by the side 11s with the projecting direction of the first projecting portion 11 at the second point S2. The inclination angle $\alpha$ and the inclination angle $\beta$ are each an acute angle. The term "electromagnetic shield" herein refers to an article that can exhibit a function of attenuating the energy of an electromagnetic wave. The principle on which an electromagnetic shield attenuates the energy of an electromagnetic wave is not limited to a particular principle. The principle can be, for example, one using a phenomenon, such as reflection, transmission, absorption, diffraction, or interference, accompanying an interaction between an electromagnetic wave and an electromagnetic shield and a phenomenon, such as scattering or diffusion of the electromagnetic wave, caused by the former phenomenon. When a given electromagnetic wave is incident on the first surface 10 of the electromagnetic shield 1a, the energy of the electromagnetic wave is attenuated.

As for the electromagnetic shield 1a, for example, in manufacturing of the electromagnetic shield 1a by resin molding, a resin easily flows into portions of a mold each corresponding to the first projecting portion 11, and a difference in time for solidification to begin due to cooling is likely to be small within the mold. Because of this, the resin is likely to be uniformly cooled in the mold, and a variation in volume shrinkage rate is likely to be small in the portion corresponding to the first projecting portion 11. Consequently, a void formed in the first projecting portion 11 as a result of shrinking in volume of the resin is likely to be small. Moreover, in this configuration, a given gradient is formed between a thin portion and a thick portion of a resin molded article and, as for shrinking of the resin by cooling-induced solidification of the resin, a difference between the volume shrinkage rate of the resin in the thin portion and the volume shrinkage rate of the resin in the thick portion is likely to be small. Consequently, a variation in volume shrinkage rate is likely to be small in the first projecting portion 11, and a void formed in the first projecting portion 11 is likely to be small. Furthermore, in this configuration, a holding pressure is likely to be applied to the inside of a mold near a gate which is a resin inlet of the mold to compress the resin, and thus the volume is likely to shrink less. Consequently, a void formed in the first projecting portion 11 is likely to be small.

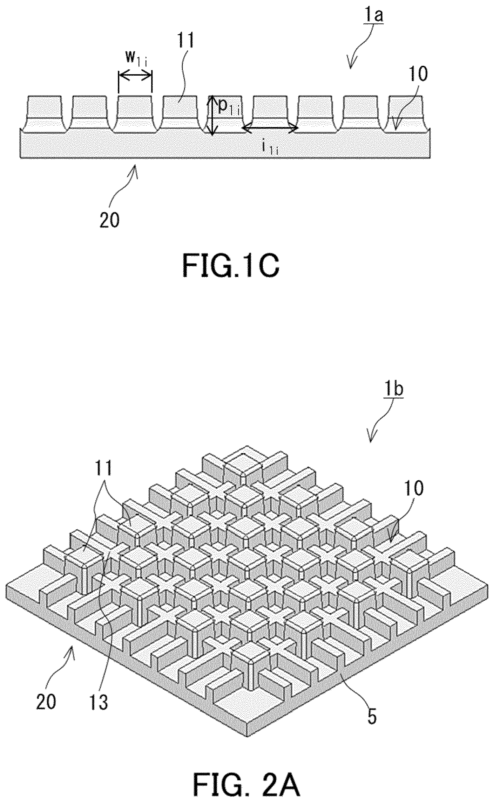

As shown in FIG. 1C, the electromagnetic shield 1a does not include a projecting portion projecting from the second surface 20 away from the first surface 10. The electromagnetic shield 1a may be modified to include second projecting portions projecting from the second surface 20 away from the first surface 10. In this case, the electromagnetic shield may include both the first projecting portions 11 and the second projecting portions, or may include the second projecting portions only. The second projecting portions can be configured in the same manner as the first projecting portions 11. At least one of the second projecting portions has a side including a third point and a fourth point, and the side makes different inclination angles with a projecting direction of the second projecting portion at the third point and the fourth point. In the projecting direction of the second projecting portion, the fourth point is closer to the second surface than the third point is. Additionally, on the side, an inclination angle $\gamma$ is greater than an inclination angle $\delta$. The inclination angle $\gamma$ is an inclination angle made by the side with the projecting direction of the second projecting portion at the third point. The inclination angle $\delta$ is an inclination angle made by the side with the projecting direction of the first projecting portion at the fourth point. In this configuration, for the same reason as above, a void formed in the second projecting portion is likely to be small.

In the electromagnetic shield 1a, the inclination angle $\alpha$ and the inclination angle $\beta$ are not limited to particular values as long as the inclination angle $\beta$ is greater than the inclination angle $\alpha$. The inclination angle $\alpha$ is, for example, 0° to 30°, and may be 0° to 20°, or 0° to 10°. The inclination angle $\beta$ is, for example, 10° to 80°, and may be 20° to 70°, or 30° to 60°. In the case of the electromagnetic shield 1a modified to include the second projecting portions, the inclination angle $\gamma$ is, for example, 0° to 30°, and may be 0° to 20°, or 0° to 10°. The inclination angle $\delta$ is, for example, 10° to 80°, and may be 20° to 70°, or 30° to 60°.

A side 11r of the first projecting portion 11 of the electromagnetic shield 1a has, for example, a curvature radius of 1 to 3 mm, the side 11r including the second point S2. In the case of the electromagnetic shield 1a modified to include the second projecting portions, a side of the second projecting portion may have a curvature radius of 1 to 3 mm, the side including the fourth point. In the above configuration, a void formed in the first projecting portion 11 is likely to be smaller.

The above curvature radius may be 1.2 to 2.8 mm or 1.5 to 2.5 mm.

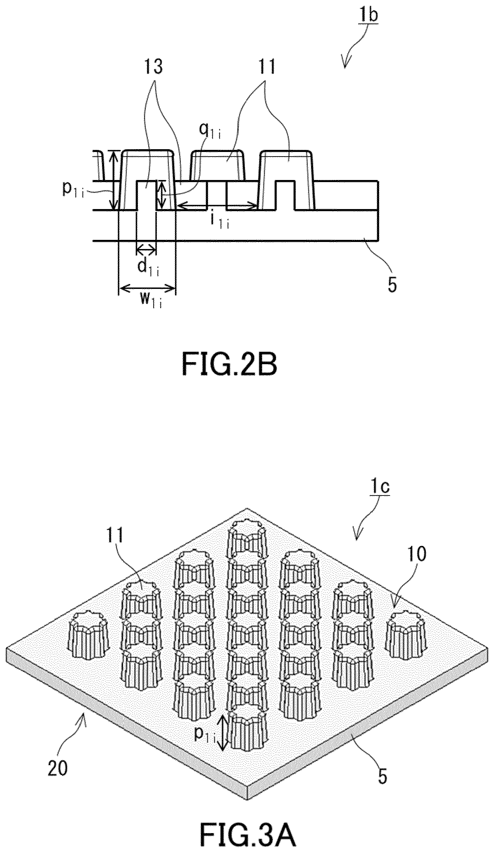

As shown in FIG. 2A, an electromagnetic shield 1b includes a first coupling portion 13 in addition to the base 5 and the first projecting portions 11. The electromagnetic shield 1b is configured in the same manner as the electromagnetic shield 1a unless otherwise described. In the electromagnetic shield 1b, the inclination angle made by the side of the first projecting portion 11 with the projecting direction of the first projecting portion 11 may be constant. The first coupling portion 13 couples at least a pair of the first projecting portions 11 adjacent to each other and projects from the first surface 10 away from the second surface 20. As shown in FIG. 2B, a width $d_{1i}$ of the first coupling portion 13 is smaller than a width $w_{1i}$ of the first projecting portion 11 coupled by the first coupling portion 13.

As for the electromagnetic shield 1b, because at least a pair of the first projecting portions 11 adjacent to each other are coupled by the first coupling portion 13, a resin is likely to flow into portions of a mold in manufacturing of the electromagnetic shield 1b by resin molding, the portions each corresponding to the first projecting portions 11. Thus, a difference in time for solidification to begin due to cooling is likely to be small within the mold. Because of this, the resin is likely to be uniformly cooled in the mold, and a variation in volume shrinkage rate is likely to be small in the portion corresponding to the first projecting portion 11. Consequently, a void formed in the first projecting portion 11 as a result of shrinking of the volume of the resin is likely to be small. Moreover, in such a configuration, because the first coupling portion 13 is provided between a thin portion and a thick portion of a resin molded article, the volume of the resin is less likely to drastically vary in the resin molded article and, as for shrinking of the resin by cooling-induced solidification of the resin, a difference between the volume shrinkage rate of the resin in the thin portion and the volume shrinkage rate of the resin in the thick portion is likely to be small. Consequently, a difference in volume shrinkage rate is less likely to be small, and a void formed in the first projecting portion 11 is likely to be small.

As shown in FIG. 2B, the electromagnetic shield 1b does not include a projecting portion projecting from the second surface 20 away from the first surface 10. The electromagnetic shield 1b may be modified to include the second projecting portions projecting from the second surface 20 away from the first surface 10. In this case, the electromagnetic shield includes a second coupling portion. The second coupling portion couples at least a pair of the second projecting portions adjacent to each other and projects from the second surface 20 away from the first surface 10. Additionally, a width $d_{2i}$ of the second coupling portion is smaller than a width $w_{2i}$ of the second projecting portion coupled by the second coupling portion. The electromagnetic shield may include the first projecting portions 11 and the second projecting portions, or may include the second projecting portions only. The second projecting portions can be configured in the same manner as the first projecting portions 11. In such a configuration, for the same reason as above, a void formed in the second projecting portion is likely to be small.

In the electromagnetic shield 1b, the width $d_{1i}$ of the first coupling portion 13 is not limited to a particular value as long as the width $d_{1i}$ of the first coupling portion 13 is smaller than the width $w_{1i}$ of the first projecting portion 11. A ratio $d_{1i}/w_{1i}$ of the width $d_{1i}$ to the width $w_{1i}$ is, for example, 0.1 to 0.6. In this case, a void formed in the first projecting portion 11 is likely to be smaller. In the case of the electromagnetic shield 1b modified to include the second projecting portions, the ratio $d_{2i}/w_{2i}$ of the width $w_{2i}$ to the width $d_{2i}$ is, for example, 0.1 to 0.6. In this case, a void formed in the second projecting portion is likely to be smaller.

Each of the ratio $d_{1i}/w_{1i}$ and the ratio $d_{2i}/w_{2i}$ may be 0.15 to 0.5, or 0.2 to 0.4.

In the electromagnetic shield 1b, a projection length $q_{1i}$ of the first coupling portion 13 is not limited to a particular value. The projection length $q_{1i}$ is, for example, smaller than a projection length $p_{1i}$ of the first projecting portion 11 coupled by the first coupling portion 13. A ratio $q_{1i}/p_{1i}$ of the projection length $q_{1i}$ to the projection length $p_{1i}$ is, for example, 0.2 to 0.8. The ratio $q_{1i}/p_{1i}$ may be 0.3 to 0.7, or 0.4 to 0.6. In the case of the electromagnetic shield 1b modified to include the second projecting portions, a projection length $q_{2i}$ of the second coupling portion is not limited to a particular value. The projection length $q_{2i}$ is, for example, smaller than the projection length $p_{2i}$ of the second projecting portion coupled by the second coupling portion. A ratio $q_{2i}/p_{2i}$ of the projection length $q_{2i}$ to the projection length $p_{2i}$ is, for example, 0.2 to 0.8. The ratio $q_{2i}/p_{2i}$ may be 0.3 to 0.7, or 0.4 to 0.6.

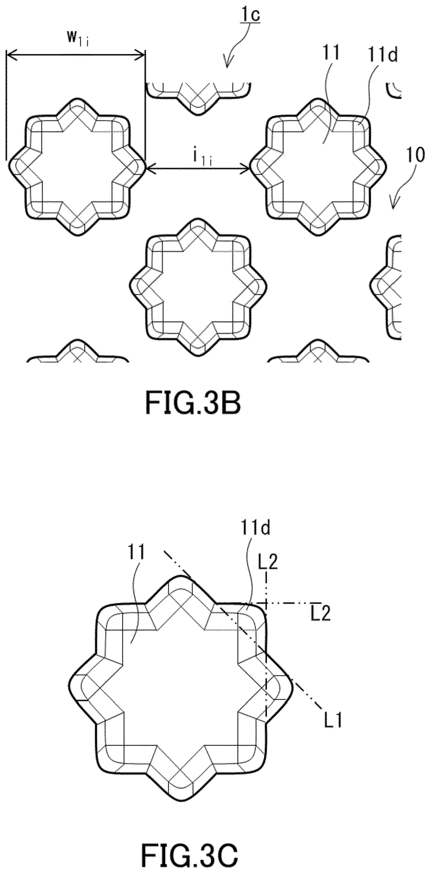

As shown in FIG. 3A and FIG. 3B, in an electromagnetic shield 1c, at least one of the first projecting portions 11 includes a first auxiliary projecting portion 11d projecting from a surface of the first projecting portion 11. The electromagnetic shield 1c is configured in the same manner as the electromagnetic shield 1a unless otherwise described. In the electromagnetic shield 1c, the inclination angle made by the side of the first projecting portion 11 with the projecting direction of the first projecting portion 11 may be constant.

Because the first projecting portion 11 of the electromagnetic shield 1c has the first auxiliary projecting portion 11d, in the case of manufacturing the electromagnetic shield 1c by resin molding, the specific surface area of a resin present in a portion of a mold is likely to be large, the portion corresponding to the first projecting portion 11. Thus, a difference in time for solidification to begin due to cooling is likely to be small within the mold, and the cooling time is likely to be shortened owing to efficient cooling of the resin. Consequently, a variation in volume shrinkage rate is likely to be small in the portion corresponding to the first projecting portion 11, and a void formed in the first projecting portion 11 is likely to be small.

The electromagnetic shield 1c does not include a projecting portion projecting from the second surface 20 away from the first surface 10. The electromagnetic shield 1c may be modified to include the second projecting portions projecting from the second surface 20 away from the first surface 10. In this case, at least one of the second projecting portions has a second auxiliary projecting portion projecting from a surface of the second projecting portion. In such a configuration, for the same reason as above, a void formed in the second projecting portion is likely to be small.

The shape of the first auxiliary projecting portion 11d is not limited to a particular shape. As shown in FIG. 3A and FIG. 3B, the first auxiliary projecting portion 11d projects, for example, from the side of the first projecting portion 11. Additionally, as shown in FIG. 3C, the first auxiliary projecting portion 11d has, for example, an outer shape abutting on a pair of straight lines L2 in plan view of the first surface 10. The pair of straight lines L2 intersect with a first straight line L1. The first straight line L1 is perpendicular to a projecting direction of the first auxiliary projecting portion 11d and extends along a root of the first auxiliary projecting portion 11d. The pair of straight lines L2 intersect with the first straight line L2 to make a pair of acute angles with the first straight line L2 at both ends of the root of the first auxiliary projecting portion 11d. In such a configuration, a void formed in the first projecting portion 11 is likely to be smaller.

In the case of the electromagnetic shield 1c modified to include the second projecting portions, the second auxiliary projecting portion has, for example, an outer shape abutting on a pair of straight lines in plan view of the second surface 10. The pair of straight lines intersect with a first straight line. In this case, the first straight line is perpendicular to a projecting direction of the second auxiliary projecting portion and extends along a root of the second auxiliary projecting portion. The pair of straight lines intersect with the first straight line to make a pair of acute angles with the first straight line at both ends of the root of the second auxiliary projecting portion . In such a configuration, a void formed in the second projecting portion is likely to be smaller.

As shown in FIG. 3C, the first projecting portion 11 includes, for example, a plurality of the first auxiliary projecting portions 11d in plan view of the first surface 10. The first auxiliary projecting portions 11d are arranged, for example, at regular intervals around an axis 11c of the first projecting portion 11. In such a configuration, a void formed in the second projecting portion is likely to be smaller. In the case of the electromagnetic shield 1c modified to include the second projecting portions, the second projecting portion includes, for example, a plurality of the second auxiliary projecting portions. The second auxiliary projecting portions are arranged, for example, at regular intervals around an axis of the second projecting portion.

An imaginary part $\varepsilon''$ of a relative permittivity of the dielectric included in the above electromagnetic shield is not limited to a particular value. For example, the imaginary part $\varepsilon''$ of the relative permittivity of the dielectric at at least one frequency in a range of 10 GHz to 300 GHz is 0.1 or less. It appears that the imaginary part $\varepsilon''$ of the dielectric is desirably large in the case of attenuating an electromagnetic wave using a dielectric loss. However, even if the imaginary part $\varepsilon''$ of the relative permittivity of the dielectric is as small as 0.1 or less, the electromagnetic shielding performance of the above electromagnetic shield is likely to be increased by adjusting a phenomenon caused by an interaction between the electromagnetic shield and an electromagnetic wave. The imaginary part $\varepsilon''$ may be 0.07 or less, 0.05 or less, or 0.01 or less.

A real part ε' of the relative permittivity of the dielectric included in the electromagnetic shield is not limited to a particular value. For example, the real part ε' of the relative permittivity of the dielectric at at least one frequency in a range of 10 GHz to 300 GHz is 2.0 to 4.0. Even in this case, the electromagnetic shielding performance of the electromagnetic shield is likely to be increased by adjusting a phenomenon caused by an interaction between the electromagnetic shield and an electromagnetic wave. The real part ε' may be 2.1 or more and 3.5 or less, or 2.2 or more and 3.0 or less. The real part ε' may be 3.8 or less, 3.6 or less, 3.4 or less, 3.2 or less, 3.0 or less, 2.8 or less, 2.6 or less, or 2.4 or less.

The material of the dielectric included in the electromagnetic shield is not limited to a particular one. The dielectric is made of, for example, a resin. The resin is, for example, a thermoplastic resin. Examples of the resin include polyethylene, polypropylene, polyvinyl alcohol, polyethylene terephthalate, polybutylene terephthalate, ethylene-vinyl acetate copolymer, polystyrene, acrylonitrile styrene, acrylonitrile-butadiene-styrene copolymer, ASA resin, AES resin, acrylic resins such as PMMA, MS resin, MBS resin, cycloolefin resin, polyacetal resin, polyamide resin, polyester resin, polycarbonate resin, polyurethane resin, liquid crystal polymer, EPDM, PPS, PEEK, PPE, polysulfone-based resin, polyimide-based resin, fluorine resin, thermoplastic elastomers such as an olefin-based thermoplastic elastomer (TPO), and acrylic elastomers. The resin may be a thermosetting resin. The thermosetting resin is, for example, an epoxy resin, an acrylic resin, or a silicone resin. The dielectric may include only one resin or two or more resins.

The electromagnetic shield may include, for example, a filler. The filler may be a colorant such as carbon black, an inorganic reinforcement such as talc, glass fibers, or a mineral, or a softener. The electromagnetic shield may include an additive such as a flame retardant or a plasticizer. The electromagnetic shield may be free of a filler. In this case, the cost of manufacturing the electromagnetic shield is likely to be low.

The electromagnetic shield includes, for example, a resin composition. A shrinkage rate of the resin composition is not limited to a particular value. For example, the shrinkage rate of the resin composition is 0.1 to 6%. The shrinkage rate of the resin composition can be determined, for example, by the following equation. In the following equation, $L_C$ is a dimension of a given part of a cavity of a mold. The symbol $L_P$ is a dimension of a molded article, the dimension corresponding to the dimension Lc, the molded article being obtained by pouring a melt of an electromagnetic shield into the mold, taking the resulting molded article out of the mold, and cooling the molded article to room temperature.

$$\text{Shrinkage rate [\%] of resin composition} = 100 \times (L_C - L_P)/L_C$$

The shrinkage rate of the resin composition of the electromagnetic shield may be 4 to 6%, or 6% or more. The shrinkage rate of the resin composition of the electromagnetic shield may be 0.5 to 2%, or 0.5% or less.

The electromagnetic shield is, for example, free of an electrically conductive portion. For electromagnetic shielding, it is conceivable that, for example, an electrically conductive portion such as a metal film is used to reflect an electromagnetic wave. However, the electromagnetic shield can block an electromagnetic wave without an electrically conductive portion. The electromagnetic shield may consist of the dielectric. The electromagnetic shield may include an electrically conductive portion.

The electromagnetic shield is, for example, a resin molded article. In this case, the cost of manufacturing the electromagnetic shield is likely to be low.

In the case where the electromagnetic shield is a resin molded article, the method for molding the electromagnetic shield is not limited to a particular method. The electromagnetic shield can be manufactured by injection molding, press molding, blow molding, or vacuum molding.

The above electromagnetic shield can be used, for example, as an electromagnetic shield for millimeter-wave radars, millimeter-wave radio communication, millimeter-wave sensing, or the like. A device including the electromagnetic shield can be used, for example, in automobiles and wireless base stations. When the electromagnetic shield is for millimeter-wave radars, the electromagnetic shield can be included in a millimeter-wave radar using one frequency band selected from the group consisting of the 24 GHz band, the 60 GHz band, the 76 GHz band, and the 79 GHz band. The electromagnetic shield is not just for blocking only an electromagnetic wave with a particular wavelength, and may block electromagnetic waves in a wide wavelength region. It is also possible to regard an electromagnetic wave with a particular wavelength λ as a "shielding target" of the electromagnetic shield. For example, in the case of the electromagnetic shield installed with a vehicle-mounted millimeter-wave radar configured to irradiate an object with an electromagnetic wave practically having frequencies of 76 to 77 GHz, i.e., having practical irradiation wavelengths of 3.89 to 3.94 mm, 3.92 mm which is the wavelength of the center frequency, 76.5 GHz, can be understood as the wavelength λ, namely, the shielding target of this electromagnetic shield. In the case where the electromagnetic shield is for vehicle-mounted millimeter-wave radars using an electromagnetic wave having frequencies of 77 to 81 GHz, i.e., using an electromagnetic wave having wavelengths of 3.70 to 3.89 mm, 3.79 mm, which is the wavelength of the center frequency, 79 GHz, can be understood as the wavelength λ, namely, the shielding target of this electromagnetic shield. In the case where the electromagnetic shield is for vehicle-mounted millimeter-wave radars using an electromagnetic wave having frequencies of 24.05 to 24.25 GHz, i.e., using an electromagnetic wave having wavelengths of 12.36 to 12.47 mm, 12.41 mm, which is the wavelength of the center frequency, 24.15 GHz, can be understood as the wavelength $\lambda$, namely, the shielding target of this electromagnetic shield. In the case where the electromagnetic shield is for millimeter-wave radars using an electromagnetic wave having frequencies of 60.0 to 60.1 GHz, i.e., using an electromagnetic wave having wavelengths of 4.99 to 5.00 mm, 4.99 mm, which is the wavelength of the center frequency, 60.05 GHz, can be understood as the wavelength $\lambda$, namely, the shielding target of this electromagnetic shield. In the case where the electromagnetic shield is for millimeter-wave radio communication using an electromagnetic wave having frequencies of 27 to 29.5 GHz, i.e., using an electromagnetic wave having wavelengths of 10.16 to 11.10 mm, 10.61 mm, which is the wavelength of the center frequency, 28.25 GHz, can be understood as the wavelength $\lambda$, namely, the shielding target of this electromagnetic shield. In the case where the electromagnetic shield is, for example, sold with a label saying that its supporting frequencies are 70 to 90 GHz, i.e., its supporting wavelengths are 3.33 to 4.28 mm, 3.75 mm, which is the wavelength of the center frequency, 80 GHz, can be understood as the wavelength $\lambda$, namely, the shielding target of this electromagnetic shield.

In the above electromagnetic shield, the projection length $p_{1i}$ of the first projecting portion 11 or the projection length $p_{2i}$ of the second projecting portion is not limited to a particular value. The electromagnetic shield is capable of blocking, for example, an electromagnetic wave with the wavelength $\lambda$. When the projection length $p_{1i}$ and the projection length $p_{2i}$ are compared with the particular wavelength $\lambda$, namely, the shielding target of the electromagnetic shield, the projection length $p_{1i}$ or $p_{2i}$ is, for example, $0.25\lambda$ or more. This allows the electromagnetic shield to block an electromagnetic wave in a more desired state. The projection length $p_{1i}$ or $p_{2i}$ is desirably $0.51\lambda$ or more, more desirably $0.77\lambda$ or more. The projection length P is, for example, $5.1\lambda$ or less, and may be $3.5\lambda$ or less, or $3.0\lambda$ or less.

For example, at least one selected from the group consisting of the projection length $p_{1i}$ of at least one of the first projecting portions 11 and the projection length $p_{2i}$ of at least one of the second projecting portions satisfies at least one selected from the group consisting of $0.25\lambda \leq p_{1i} \leq 1.3\lambda$ and $0.25\lambda \leq p_{2i} \leq 1.3\lambda$. In this case, the electromagnetic shield is likely to have even higher electromagnetic shielding performance.

When the requirement $0.25\lambda \leq p_{1i} \leq 1.3\lambda$ or $0.25\lambda \leq p_{2i} \leq 1.3\lambda$ is satisfied, the projection length $p_{1i}$ or $p_{2i}$ may be $0.30\lambda$ or more, $0.35\lambda$ or more, $0.40\lambda$ or more, $0.45\lambda$ or more, or $0.50\lambda$ or more. The projection length $p_{1i}$ or $p_{2i}$ may be $1.2\lambda$ or less, $1.1\lambda$ or less, $1.0\lambda$ or less, or $0.9\lambda$ or less.

Fifty percent or more of the first projecting portions 11 or the second projecting portions on a number basis satisfy, for example, the requirement $0.25\lambda \leq p_{1i} \leq 1.3\lambda$ or $0.25\lambda \leq p_{2i} \leq 1.3\lambda$. Sixty percent or more of the projecting portions on a number basis may satisfy the requirement $0.25\lambda \leq p_{1i} \leq 1.3\lambda$ or $0.25\lambda \leq p_{2i} \leq 1.3\lambda$. Seventy percent or more of the projecting portions on a number basis may satisfy the requirement $0.25\lambda \leq p_{1i} \leq 1.3\lambda$ or $0.25\lambda \leq p_{2i} \leq 1.3\lambda$. Eighty percent or more of the projecting portions on a number basis may satisfy the requirement $0.25\lambda \leq p_{1i} \leq 1.3\lambda$ or $0.25\lambda \leq p_{2i} \leq 1.3\lambda$. Ninety percent or more of the projecting portions on a number basis may satisfy the requirement $0.25\lambda \leq p_{1i} \leq 1.3\lambda$ or $0.25\lambda \leq p_{2i} \leq 1.3\lambda$. All projecting portions may satisfy the requirement $0.25\lambda \leq p_{1i} \leq 1.3\lambda$ or $0.25\lambda \leq p_{2i} \leq 1.3\lambda$.

In the above electromagnetic shield, the width $w_{1i}$ of the first projecting portion 11 or the width $w_{2i}$ of the second projecting portion is not limited to a particular value. When the widths $w_{1i}$ and $w_{2i}$ are compared with the particular wavelength $\lambda$, namely, the shielding target of the electromagnetic shield, the width $w_{1i}$ or $w_{2i}$ is, for example, $0.12\lambda$ or more. This allows the electromagnetic shield to block an electromagnetic wave in a more desired state. The width $w_{1i}$ or $w_{2i}$ is desirably $0.25\lambda$ or more, more desirably $0.51\lambda$ or more. The width $w_{1i}$ or $w_{2i}$ is, for example, $5.0\lambda$ or less, and may be $4.0\lambda$ or less, or $3.0\lambda$ or less.

For example, at least one selected from the group consisting of the width $w_{1i}$ of at least one of the first projecting portions 11 and the width $w_{2i}$ of at least one of the second projecting portions satisfies at least one selected from the group consisting of $0.51\lambda \leq w_{1i} \leq 1.6\lambda$ and $0.51\lambda \leq w_{2i} \leq 1.6\lambda$. In this case, the electromagnetic shield is likely to have even higher electromagnetic shielding performance.

When the requirement $0.51\lambda \leq w_{1i} \leq 1.6\lambda$ or $0.51\lambda \leq w_{2i} \leq 1.6\lambda$ is satisfied, the width $w_{1i}$ or $w_{2i}$ may be $0.55\lambda$ or more, $0.60\lambda$ or more, $0.65\lambda$ or more, $0.70\lambda$ or more, or $0.75\lambda$ or more. The width $w_{1i}$ or $w_{2i}$ may be $1.5\lambda$ or less, $1.4\lambda$ or less, $1.3\lambda$ or less, $1.2\lambda$ or less, $1.1\lambda$ or less, or $1.0\lambda$ or less.

Fifty percent or more of the first projecting portions 11 or the second projecting portions on a number basis satisfy, for example, the requirement $0.51\lambda \leq w_{1i} \leq 1.6\lambda$ or $0.51\lambda \leq w_{2i} \leq 1.6\lambda$. Sixty percent or more of the projecting portions on a number basis may satisfy the requirement $0.51\lambda \leq w_{1i} \leq 1.6\lambda$ or $0.51\lambda \leq w_{2i} \leq 1.6\lambda$. Seventy percent or more of the projecting portions on a number basis may satisfy the requirement $0.51\lambda \leq w_{1i} \leq 1.6\lambda$ or $0.51\lambda \leq w_{2i} \leq 1.6\lambda$. Eighty percent or more of the projecting portions on a number basis may satisfy the requirement $0.51\lambda \leq w_{1i} \leq 1.6\lambda$ or $0.51\lambda \leq w_{2i} \leq 1.6\lambda$.

Ninety percent or more of the projecting portions on a number basis may satisfy the requirement $0.51\lambda \leq w_{1i} \leq 1.6\lambda$ or $0.51\lambda \leq w_{2i} \leq 1.6\lambda$. All projecting portions may satisfy the requirement $0.51\lambda \leq w_{1i} \leq 1.6\lambda$ or $0.51\lambda \leq w_{2i} \leq 1.6\lambda$.

In the above electromagnetic shield, an interval in between the first projecting portions 11 or an interval $i_{2i}$ between the second projecting portions is not limited to a particular value. When the intervals in and $i_{2i}$ are compared with the particular wavelength $\lambda$, namely, the shielding target of the electromagnetic shield, the interval in or the interval

$i_{2i}$ is, for example, 5.1λ or less. This allows the electromagnetic shield to block an electromagnetic wave in a more desired state. The interval in or the interval $i_{2i}$ is desirably 3.10λ or less, more desirably 2.04λ or less. The interval in or the interval $i_{2i}$ is, for example, 0.25λ or more, and may be 0.5λ or more, or 1.0λ or more.

In the above electromagnetic shield, at least one selected from the group consisting of the interval in and the interval $i_{2i}$ satisfies at least one selected from the group consisting of $0.51\lambda \leq i_{1i} \leq 1.6\lambda$ and $0.51\lambda \leq i_{2i} \leq 1.6\lambda$. In this case, the electromagnetic shield is likely to have even higher electromagnetic shielding performance. When the requirement $0.51\lambda \leq i_{1i} \leq 1.6\lambda$ or $0.51\lambda \leq i_{2i} \leq 1.6\lambda$ is satisfied, the interval $i_{1i}$ or the interval $i_{2i}$ may be 0.55λ or more, 0.60λ or more, 0.65λ or more, 0.70λ or more, or 0.75λ or more. The interval $i_{1i}$ or the interval $i_{2i}$ may be 1.5λ or less, 1.4λ or less, or 1.3λ or less.

The shapes of the first projecting portion 11 and the second projecting portion are not limited to particular shapes. An outer shape of the first projecting portion 11 or the second projecting portion is, in plan view, for example, at least one selected from the group consisting of a circle, a triangle, a quadrilateral, and a polygon having five or more corners. In such a configuration, the electromagnetic shield is likely to have even higher electromagnetic shielding performance. The first projecting portion 11 or the second projecting portion may be in the shape of, for example, at least one selected from the group consisting of a column, a hemisphere, and a projecting strip. The first projecting portion 11 or the second projecting portion of the electromagnetic shield is in a columnar shape, the projecting portion may be in the shape of a triangular prism, a quadrilateral prism, another polygonal prism, a cylinder, a truncated pyramid, or a truncated cone.

In the above electromagnetic shield, arrangement of the first projecting portions 11 is not limited to particular arrangement. Arrangement of the first projecting portions 11 is, for example, at least one selected from the group consisting of arrangement at lattice points, arrangement on parallel lines, and random arrangement in plan view. The first projecting portions 11 may be arranged to make a parallelogram lattice, a square lattice, or a rectangular lattice in plan view.

In the above electromagnetic shield, arrangement of the second projecting portions is not limited to particular arrangement. Arrangement of the second projecting portions is, for example, at least one selected from the group consisting of arrangement at lattice points, arrangement on parallel lines, and random arrangement in plan view. The second projecting portions may be arranged to make a parallelogram lattice, a square lattice, or a rectangular lattice in plan view.

A thickness of the base 5 is not limited to a particular value. The thickness of the base 5 is, for example, 0.5 mm to 3 mm. The thickness of the base 5 may be 0.7 mm or more, or 0.8 mm or more. The thickness of the base 5 may be 2.5 mm or less, or 2 mm or less.

In the above electromagnetic shield, a ratio Vv/Vp of a volume Vv of a void in the first projecting portion 11 or the second projecting portion to a volume Vp of the first projecting portion 11 or the second projecting portion is not limited to a particular value. The ratio Vv/Vp is, for example, 20% or less. In this case, the electromagnetic shield is likely to exhibit desired electromagnetic shielding performance. The volume Vv of the void may be determined, for example, from an image of a given cross-section of the projecting portion along the projecting direction of the first projecting portion 11 or the second projecting portion, or on the basis of a CT scan image of the electromagnetic shield. For example, a CT scan image of the electromagnetic shield may be obtained using a CT scanning apparatus Zeiss Xradia 520 Versa manufactured by ZEISS. Alternatively, the ratio Vv/Vp may be determined on the basis of a relation $Vv = Vp - (W/d)$, where W is a mass of the projecting portion, Vp is a volume of the projecting portion, and d is a density of a void-free portion of the electromagnetic shield. In this case, the volume Vp of the projecting portion can be determined, for example, by measuring the shape of the projecting portion 11 using a laser displacement meter or the like. The density d can be determined by a known density measurement method such as the Archimedes method or the flotation method.

In the electromagnetic shield, the ratio Vv/Vp is desirably 19% or less, more desirably 18% or less, even more desirably 17% or less, particularly desirably 16% or less, especially desirably 15% or less. The ratio Vv/Vp may be 0%, 0.1% or more, 0.2% or more, 0.5% or more, or 1% or more.

When the first projecting portion 11 or the second projecting portion is in a columnar shape, a ratio Dv/W of a diameter Dv of the void to a width W of the projecting portion is not limited to a particular value. The ratio Dv/W is, for example, 0.7 or less. In this case, the electromagnetic shield can block a radio wave in a more desired state. The diameter Dv can be determined, for example, by observing a cross-section of the projecting portion including the central axis of the columnar projecting portion. For example, the maximum dimension of the void on the cross-section is determined as the diameter Dv.

When the projecting portion is in a columnar shape, the ratio Dv/W is desirably 0.65 or less, more desirably 0.6 or less. The ratio Dv/W is, for example, 0.01 or more, and may be 0.1 or more.

When the projecting portion is in a hemispherical shape, the ratio Dv/W of the diameter Dv of the void to the width W of the projecting portion is not limited to a particular value. The ratio Dv/W is, for example, 0.45 or less. In this case, the electromagnetic shield can block a radio wave in a more desired state. The diameter Dv can be determined, for example, by observing a cross-section of the projecting portion including the central axis of the projecting portion.

For example, the maximum dimension of the void on the cross-section is determined as the diameter Dv.

When the projecting portion is in a hemispherical shape, the ratio Dv/W is desirably 0.42 or less, more desirably 0.40 or less, even more desirably 0.38 or less. The ratio Dv/W is, for example, 0.01 or more, and may be 0.1 or more.

When the projecting portion is a projecting strip, the ratio Dv/W of the diameter of the void in a direction perpendicular to the longitudinal direction of the projecting portion to the width W of the projecting portion is not limited to a particular value. The ratio Dv/W is, for example, 0.5 or less. In this case, the electromagnetic shield can block a radio wave in a more desired state. The diameter Dv can be determined, for example, by observing a cross-section of the projecting portion, the cross-section being perpendicular to the longitudinal direction of the projecting portion. For example, the maximum dimension of the void on the cross-section is determined as the diameter Dv.

When the projecting portion is a projecting strip, the ratio Dv/W is desirably 0.45 or less, more desirably 0.4 or less, even more desirably 0.3 or less. The ratio Dv/W is, for example, 0.01 or more, and may be 0.1 or more.

The electromagnetic shield may satisfy, for example, at least one selected from the group consisting of the following requirements (A-1) and (A-2). In such a configuration, the electromagnetic shield can block an electromagnetic wave in a more desired state. In the following requirements (A-1) and (A-2), Sp is a total area of the plurality of first projecting portions 11 or the plurality of second projecting portions measured when the first surface 10 or the second surface 20 is viewed in plan. Se is an area of the entire electromagnetic shield measured when the first surface 10 is viewed in plan. So is an area of the entire electromagnetic shield measured when the second surface 20 is viewed in plan.

$$0.2 \leq Sp/Se \leq 0.8 \text{ (A-1)}$$

$$0.2 \leq Sp/So \leq 0.8 \text{ (A-2)}$$

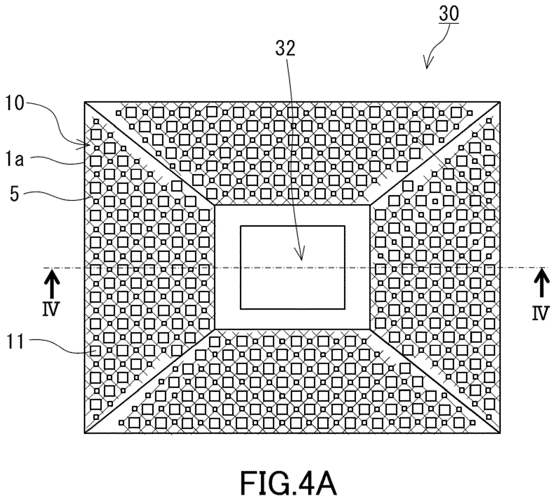

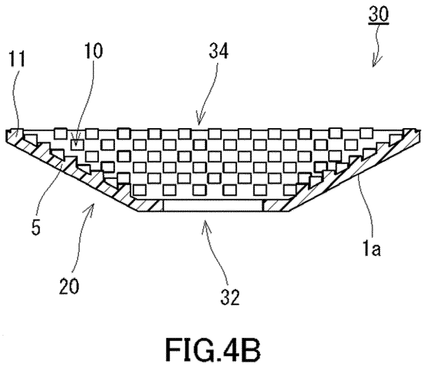

The shapes of the electromagnetic shield and the base 5 thereof are not limited to particular shapes. As shown in FIGS. 4A and 4B, at least one selected from the group consisting of the electromagnetic shield 1a and the base 5 is, for example, a ring-shaped body and has a polygonal or circular outer perimeter when the first surface 10 is viewed along an axis of the ring-shaped body. In such a configuration, an electromagnetic wave incident on the first surface 10 through a space surrounded by at least one selected from the group consisting of the electromagnetic shield and the base 5 can be blocked.

As shown in FIG. 4A and FIG. 4B, an outer shape of at least one selected from the group consisting of the electromagnetic shield and the base 5 is, for example, a truncated pyramidal shape. At least one of the electromagnetic shield and the base 5 is, for example, a hollow body and has an opening in each of positions in the outer shape, the positions corresponding to an upper base and a lower base of a truncated pyramid. At least one of the electromagnetic shield and the base 5 has, for example, a first opening 32 in a position corresponding to the upper base of a truncated pyramid and a second opening 34 in a position corresponding to the lower base thereof. The first surface 10 is an inner side surface of the hollow body being the electromagnetic shield 1a or the base 5. The second surface 20 is an outer side surface of the hollow body being the electromagnetic shield or the base 5. In such a configuration, electromagnetic shielding by the electromagnetic shield can be achieved in a larger space. Furthermore, the first opening 32 of the electromagnetic shield can be used to dispose therein an antenna for transmission and reception of an electromagnetic wave. The outer shape of at least one selected from the group consisting of the electromagnetic shield and the base 5 may be a truncated conical shape or a truncated elliptical conical shape. In this case, the electromagnetic shield has an opening in each of positions in the outer shape, the positions corresponding to the upper base and the lower base of a truncated cone or a truncated elliptic cone.

The first projecting portions 11 or the second projecting portions project, for example, in a direction perpendicular to the lower base of a truncated pyramid, a truncated cone, or a truncated elliptic cone being the outer shape of the electromagnetic shield or the base 5. In such a configuration, the electromagnetic shield is likely to have even higher electromagnetic shielding performance. Moreover, such a configuration is advantageous in manufacturing, for example, in that the electromagnetic shield made by injection molding can be released from a simple mold without a structure such as a slide core.

The first projecting portions 11 or the second projecting portions each may have a draft angle toward a direction away from the base 5. A corner portion of the first projecting portion 11 or the second projecting portion may be formed of a curved surface having a given curvature radius. Such a configuration is desirable, for example, in manufacturing the electromagnetic shield by injection molding from the viewpoint of release of a molded article from a mold.

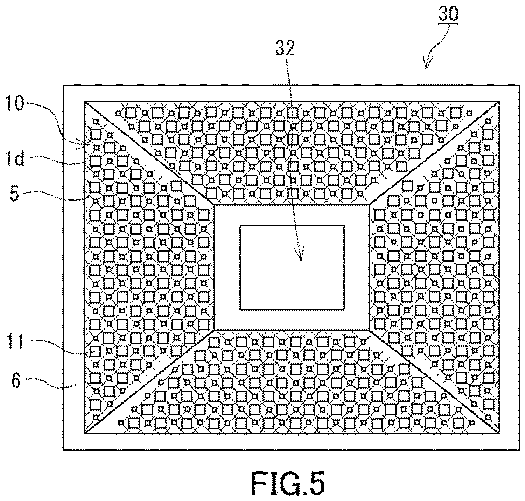

The electromagnetic shield may be modified to an electromagnetic shield 1d as shown in FIG. 5. The electromagnetic shield 1d is configured in the same manner as the electromagnetic shield 1a unless otherwise described. The electromagnetic shield 1d includes a contact portion 6. The contact portion 6 is a portion configured to be in contact with a component other than the electromagnetic shield 1d. The contact portion 6 abuts on a polygonal or circular outer perimeter seen when the first surface 10 is viewed along the axis of the electromagnetic shield 1d or the base 5 in a ring shape. With such a configuration, the electromagnetic shield 1b can be attached to another component with the contact portion 6 in contact with the other component. The contact portion 6 forms, for example, a flange.

An application of the electromagnetic shield is not limited to a particular application. As shown in FIG. 4A, FIG. 4B, and FIG. 5, for example, a radar cover 30 including the electromagnetic shield 1a can be provided. A component that includes the electromagnetic shield 1a and that is other than a radar cover may be provided.

As shown in FIG. 4A, FIG. 4B, and FIG. 5, the radar cover 30 is, for example, in the shape of a hollow truncated pyramid, and has the first opening 32 and the second opening 34. Each of the first opening 32 and the second opening 34 is, for example, rectangular. The second opening 34 is bigger than the first opening 32. A portion, such as an antenna of a radar (not illustrated), of a radar is disposed in the first opening 32. An internal surface of the radar cover 30 is the first surface 10 of the electromagnetic shield 1a, and the first projecting portions 11 are provided on the internal surface. On the other hand, an external surface of the radar cover 30 is the second surface 20 of the electromagnetic shield 1a.

An unnecessary radio wave incident on the internal surface of the radar cover 30 is blocked by the electromagnetic shield 1a. This can consequently prevent a radar from receiving unnecessary radio waves.

For the electromagnetic shield, an interaction occurring between the electromagnetic shield and an electromagnetic wave for blocking of the electromagnetic wave is not limited to a particular interaction. The electromagnetic shield, for example, transmits at least a portion of a radio wave incident on the first surface 11 and allows a scattered radio wave to emerge from the second surface 12. In other words, the electromagnetic shield can function as a radio-wave transmitting-scattering body. Electromagnetic shielding can therefore be achieved with a simple configuration.

The electromagnetic shield has a scattering ratio of, for example, 0.1% or more. The term "scattering ratio" refers to a ratio of an intensity of a particular transmitted-scattered wave to an intensity of a straight transmitted wave emerging from the second surface 20, the intensities being measured when a radio wave is perpendicularly incident on the first surface 10. The scattering ratio is determined, for example, by the following equation (1). In the equation (1), "Intensity of transmitted-scattered wave" is, for example, a sum of intensities measured for a transmitted-scattered wave at scattering angles of 15°, 30°, 45°, 60°, and 75°. The term "scattering angle" refers to an angle between an emergent direction of a straight transmitted wave and an emergent direction of a transmitted-scattered wave.

Scattering ratio = Intensity of transmitted-scattered wave/Intensity of straight transmitted wave          Equation (1)

The intensity of the transmitted-scattered wave and the intensity of the straight transmitted wave can be determined with reference to Japanese Industrial Standards (JIS) R 1679: 2007, for example, by allowing a radio wave to be perpendicularly incident on the first surface 10 and measuring a transmission attenuation in a straight direction and a transmission attenuation at a given scattering angle. Each transmission attenuation is expressed by the following equation (2). In the equation (2), $P_i$ is a received electric power, and $P_0$ is a transmitted electric power. $|P_i/P_0|$ corresponds to the intensity of a transmitted wave. "Log" represents a common logarithm.

$$\text{Transmission attenuation} = |10\text{Log}(P_i/P_0)| \qquad \text{Equation (2)}$$

The scattering ratio of the electromagnetic shield may be 1% or more, 5% or more, 10% or more, 20% or more, 50% or more, 100% or more, 150% or more, or 200% or more.

The structure of the electromagnetic shield including the first projecting portions 11 or the second projecting portions is thought to function, for example, as a diffraction grating. Regarding light diffraction, a zero-order light transmittance $I_0$ through a diffraction grating having a rectangular cross-section is expressed by the following equation (3) in accordance with a scalar diffraction theory. In the equation (3), $\varepsilon_r$ is the real part of the relative permittivity of the material of the diffraction grating, and sqrt($\varepsilon_r$) is a square root of $\varepsilon_r$. The symbol h is a height of a protruding portion of the diffraction grating. The symbol $\lambda$ is the wavelength of light.

$$I_0 = \cos^2(\pi \cdot |\text{sqrt}(\varepsilon_r)| - 1 \cdot (h/\lambda)) \qquad \text{Equation (3)}$$

According to Bragg's law, a direction (scattering angle) of a scattered-transmitted wave generated by diffraction is determined by a pitch of protruding portions of a diffraction grating. Constructive interference and destructive interference between diffraction waves having passed between the protruding portions generate an interference fringe. It is thought that in this case, a transmitted-scattered wave is observed as a result of constructive interference between diffraction waves. Constructive interference between diffraction waves can be expressed by an equation (4), while destructive interference between diffraction waves can be expressed by an equation (5). In the equations (4) and (5), d is a pitch of protruding portions of a diffraction grating, θ is an angle at which constructive interference or destructive interference between diffraction waves occurs, m is an integer of 0 or greater, and λ is the wavelength of an incident wave. It is understood that when λ is constant, the scattering angle of a transmitted-scattered wave can vary depending on the pitch of the protruding portions of the diffraction grating. Table 1 shows an example of a relation between the scattering angle θ at which constructive interference between diffraction waves occurs and the pitch d.

$$dsin\theta = m\lambda \qquad \text{Equation (4)}$$

$$dsin\theta = (m + 1/2)\lambda \qquad \text{Equation (5)}$$

[Table 1]

| Scattering angle θ | | Interference | Pitch d [mm] of protruding portions of diffraction grating | | | | | | | | |
|---|---|---|---|---|---|---|---|---|---|---|---|
| | | | 4 | 5 | 6 | 7 | 8 | 9 | 10 | 11 | 12 |
| Order of diffraction m | 0 | Constructive | 0° | 0° | 0° | 0° | 0° | 0° | 0° | 0° | 0° |
| | 0 | Destructive | 29° | 23° | 19° | 16° | 14° | 13° | 11° | 10° | 9° |
| | 1 | Constructive | 79° | 52° | 41° | 34° | 29° | 26° | 23° | 21° | 19° |
| | 1 | Destructive | - | - | 79° | 57° | 47° | 41° | 36° | 32° | 29° |
| | 2 | Constructive | - | - | - | - | 79° | 61° | 52° | 45° | 41° |
| | 2 | Destructive | - | - | - | - | - | - | 79° | 63° | 55° |
| | 3 | Constructive | - | - | - | - | - | - | - | - | 79° |

EXAMPLES

The present invention will be described hereinafter in more details by examples. The present invention is not limited to the examples given below.

[Resin flow analysis]

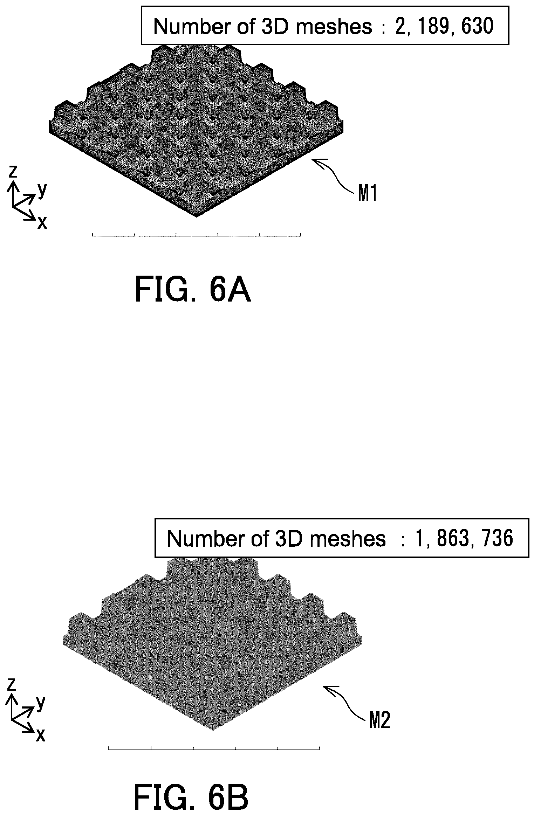

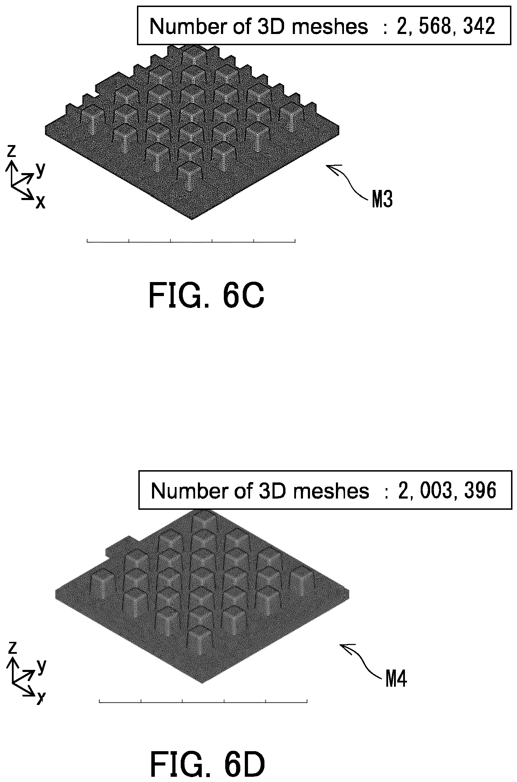

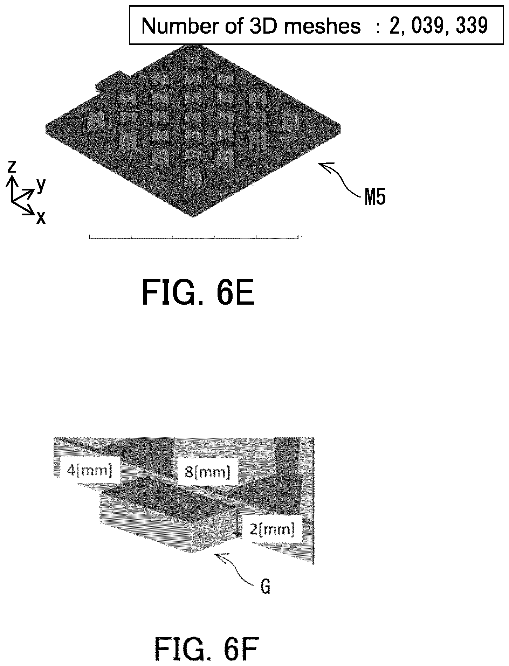

Flow analysis of resin injection molding was performed using a computation model M1 as shown in FIG. 6A, a computation model M2 as shown in FIG. 6B, a computation model M3 as shown in FIG. 6C, a computation model M4 as shown in FIG. 6D, and a computation model M5 as shown in FIG. 6E. In each computation model, a flat-plate-shaped base was in the shape of a square 50 mm on a side in plan view, and the base had a thickness of 2.5 mm. As shown in FIG. 6F, a parallelepiped portion G corresponding to a gate in injection molding was provided at the middle of one side of the square base. As shown in FIG. 6F, the portion G had a thickness of 2 mm, a width of 4 mm, and a length of 8 mm. The distance between the ends of each scale shown in FIG. 6A to FIG. 6E was 50 mm. An end face of the portion G in the thickness direction was flush with the other principal surface of the base.

The computation model M1 was identical to a target T2 used in the later-described electromagnetic field analysis in the shape of each projecting portion, the dimensions of each projecting portion, and arrangement of the projecting portions, and a surface of a bottom portion of the projecting portion projecting from one principal surface, namely the first surface, of the base was formed as a curved surface having a curvature radius of 2.5 mm. The computation model M2 was produced in the same manner as the computation model M1 except for the following points. Sides of each projecting portion of the computation model M2 were formed flat, and the surface of the bottom portion of each projecting portion was not formed as a curved surface.

The computation model M3 was identical to a target T3 used in the later-described electromagnetic field analysis in the shape of each projecting portion, the dimensions of each projecting portion, and arrangement of the projecting portions. In the computation model M3, each projecting portion was coupled with its adjacent projecting portion by a coupling portion. The computation model M4 was formed in the same manner as the computation model M3, except that no coupling portions were formed.

The computation model M5 was identical to the target T1 used in the later-described electromagnetic field analysis in the shape of each projecting portion, the dimensions of each projecting portion, and arrangement of the projecting portions.

An analysis software Autodesk Moldflow 2021.2 was used in resin flow analysis using the above computation models. The physical property parameters of "Thermorun TT1028 (Talc 10%) Mitsubishi Chemical Corporation" registered in this analysis software were used as the physical property parameters of a resin. In the flow analysis, the temperature of the surface of a mold was set at 50°C, and the temperature of the resin to be injected into the mold was set at 230°C, which is a temperature recommended for injection molding of Thermorun TT1028: Mitsubishi Chemical Corporation. A screw diameter for the injection molding was set to 45 mm. A volumetric flow rate of the resin at which the mold is charged with the resin for the injection molding was set to 80 cm$^3$/sec. The volumetric flow rate was determined taking into account an injection speed (screw speed) of 50 mm/sec and the screw diameter of 45 mm. Holding pressure conditions were 20 MPa for 5 seconds for the injection molding. A cooling time for cooling the resin in the mold was set to 30 seconds.

On the basis of the result of the above flow analysis, a volume shrinkage at a particular moment was calculated for each computation model by the following equation (6). In the equation (6), VS1 is a specific volume of the resin at a temperature of 25°C and a gauge pressure of 0 MPa, and VS2 is a specific volume of the resin at the particular moment for each computation model. A volume shrinkage at the moment of solidification of the resin can be determined by selecting, as the particular moment, a moment when the resin solidified in the injection molding.

$$\text{Volume shrinkage [\%]} = (VS1 - VS2)/VS1 \qquad \text{Equation (6)}$$

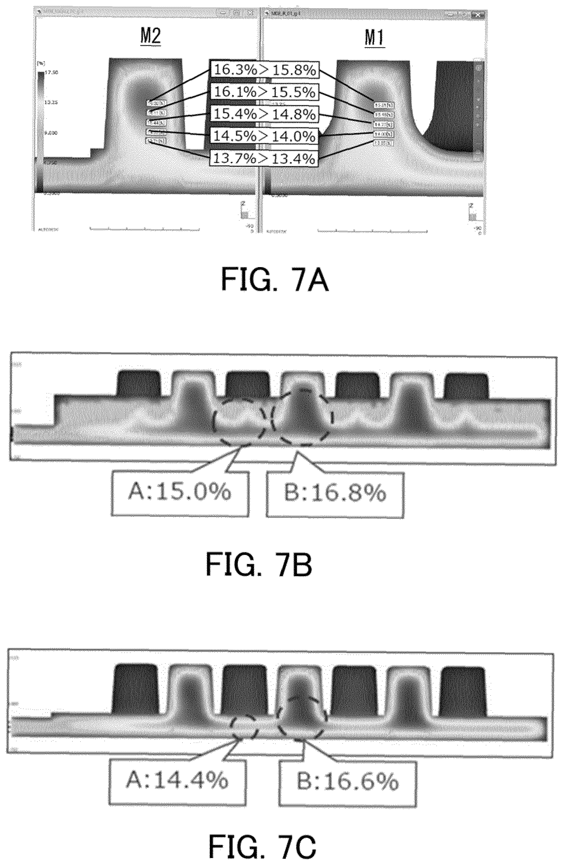

FIG. 7A shows the computation results for volume shrinkages in the projecting portions near the portions G of the computation models M1 and M2 at the moment when approximately 35 seconds had passed since the start of cooling of the resin. As shown in FIG. 7A, the volume shrinkages at particular points in the projecting portion of the computation model M1 are smaller than the volume shrinkages at points in the projecting portion of the computation model M2, the points being located at the same heights as the corresponding particular points. This means that a void is less likely to be created in the projecting portion of the computation model M1. As described above, since the surface of the bottom portion of the projecting portion of the computation model M1 was formed as a curved surface having a curvature radius of 2.5 mm, the pressure holding can be effectively achieved inside a mold for the computation model M1.

FIG. 7B and FIG. 7C respectively show the computation results for volume shrinkages in portions in the computation model M3 and corresponding portions in the computation model M4 at the moment when approximately 35 seconds had passed since the start of cooling of the resin. As shown in FIG. 7B, the volume shrinkages of two portions surrounded by broken lines are 15.0% and 16.8%, and the difference between them is 2.2%. On the other hand, as shown in FIG. 7C, the volume shrinkages of two portions surrounded by broken lines are 14.4% and 16.6%, and the difference between them is 1.8%. It is understood that in the case of the computation model M3, the coupling portion between the projecting portions reduces a drastic variation of the volume of the resin and therefore, in shrinking of the resin by cooling and solidification, the difference between the volume shrinkage in a thin portion and the volume shrinkage in a thick portion is likely to be small. It is understood that in consequence, a void is likely to be small.

According to the analysis result for the computation model M5, an auxiliary projecting portion provided to the projecting portion to project from the surface of the projecting portion increases the specific surface area of the projecting portion, which results in effective cooling of the resin and therefore tends to shorten the cooling time. It is understood that the difference in volume shrinkage is therefore likely to be small in the portion corresponding to the projecting portion and a void formed inside the projecting portion is likely to be small.

[Electromagnetic field analysis]

The worst value of a transmission attenuation at incidence of an electromagnetic wave EM on one principal surface of the target T1 was determined using a computation model as shown in FIG. 8A, FIG. 8B, and FIG. 8C and Electronics Desktop HFSS 2021 R1, a software manufactured by Ansys. In analysis using the computation model, an electromagnetic wave strength in a computation space V1 and that in a computation space V2 were determined by numerically solving Maxwell's equations. The strength of the electromagnetic wave in each of the computation space V1 and the computation space V2 was calculated according to the finite element method and the method of moments. The method of moments was applied to a boundary between the regions to which the finite element method was applied. There was placed the target T1 in the computation region V1. The number of spatial meshes of the target T1 was 70000. The number of spatial meshes of each of the computation regions V1 and V2 was 500000. The target T1 was in the shape of a square 70 mm on a side in plan view and had projecting portions projecting from one principal surface of the flat-plate-shaped base having a thickness of 2.5 mm. FIG. 8D is a plan view of part of the one principal surface of the target T1. The projection length of the projecting portion was 5 mm, and, in plan view, a distance between centers of the projecting portions adjacent to each other was 11 mm. FIG. 8E is a plan view of the projecting portion of the target T1. The projecting portion of the target T1 had an auxiliary projecting portion on its surface, and the projecting portion had a hexadecagonal shape in plan view. A side of the projecting portion was inclined to the projecting direction of the projecting portion at an inclination angle of 3°. As shown in FIG. 8E, in a plan view of the projecting portion, a distance between a center C of the projecting portion and a point of intersection of a straight line L1 and a straight line passing the center C of the projecting portion and being perpendicular to the straight line L1 was 2.35 mm. The real part $\varepsilon'$ of the relative permittivity of the target T1 was 2.3, and the imaginary part $\varepsilon''$ of the relative permittivity thereof was 0.

A receiving plane F was defined in the computation space V2. The receiving plane F was 120 mm away from a point of intersection of the other principal surface of the plate-shaped base of the target T1 and a straight line extending in a straight direction of the electromagnetic wave EM. The receiving plane F was composed of a series of forty-six 30 mm-diameter circles having, as their centers, forty-six points 2° distant from each other. The forty-six points were present in a plane parallel to the z-y plane. One of the forty-six points was on a straight line being perpendicular to the other surface of the target T1 and extending in the straight direction of the electromagnetic wave EM.

In the above computation model, the electromagnetic wave EM had a frequency of 76.5 Hz, and the electromagnetic wave EM was incident on the target T1 in a direction perpendicular to the one principal surface of the target T1. An irradiated region of the target T1 irradiated with the electromagnetic wave EM was in the shape of a circle having a diameter of 30 mm. A straight line passing this circle and being perpendicular to the other surface of the target T1 is the straight line extending in the straight direction of the electromagnetic wave EM. An amplitude direction of the electric field of the electromagnetic wave EM was parallel to the y-axis direction, was parallel to one pair of opposite sides of the outline of the target T1 having a square shape in plan view, and was perpendicular to the other pair of opposite sides.

In the above computation model, the electromagnetic wave EM was allowed to be incident on the target T1, and electric powers at the above forty-six points forming the receiving plane F were determined. The value of the largest electric power of these electric powers was defined as X [W]. In a computation model produced in the same manner as the above computation model except that the target T1 was omitted, an electric power at a point on the receiving plane F was determined, the point being positioned on the straight line extending in the straight direction of the electromagnetic wave EM. The value of the electric power was defined as Y [W]. The worst value of the transmission attenuation for the computation model including the target T1 was determined according to the following equation (7). In the equation (7), "Log" represents a common logarithm. The worst value of the transmission attenuation for the computation model including the target T1 was 14 dB.

$$\text{Worst value [dB] of transmission attenuation} = |10\text{Log}(X/Y)| \qquad \text{Equation (7)}$$

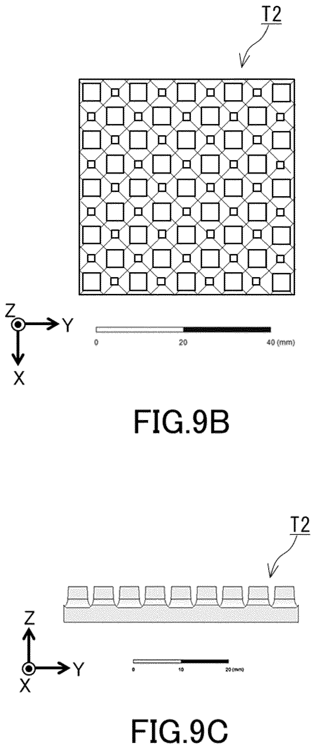

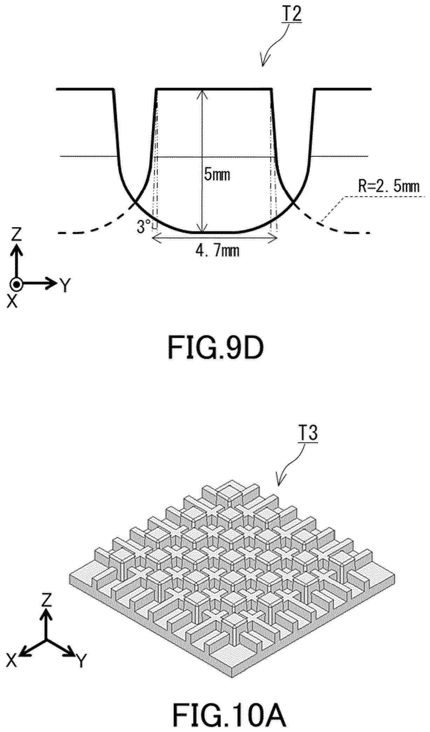

A computation model was produced in the same manner as for the computation model including the target T1, except that a target T2 shown in FIG. 9A, FIG. 9B, FIG. 9C, and FIG. 9D was included instead of the target T1. The worst value of the transmission attenuation for the computation model was determined.

The target T2 was produced in the same manner as the target T1 unless otherwise described. As shown in FIG. 9D, in the target T2, a portion of the side was inclined to the projecting direction of the projecting portion at an inclination angle of 3°, the portion bordering on a top of the projecting portion. Meanwhile, the surface of the bottom portion of the projecting portion was a curved surface having a curvature radius R of 2.5 mm. The projection length of the projecting portion was 5 mm, and a width of the foot of the projecting portion was 4.7 mm. The width of the foot of the projecting portion corresponds to a distance between a pair of line segments formed when a pair of planes extending toward the base intersect with the one principal surface of the base, the pair of planes including a pair of sides of the projecting portion, the pair of sides each being inclined at an inclination angle of 3°.

The worst value of the transmission attenuation for the computation model including the target T2 was 14 dB.

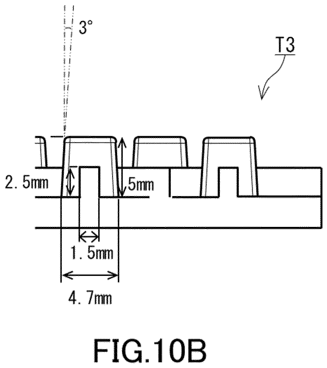

A computation model was produced in the same manner as for the computation model including the target T1, except that the target T3 shown in FIGS. 10A and 10B was included instead of the target T1. The worst value of the transmission attenuation for the computation model was determined.

The target T3 was produced in the same manner as the target T1 unless otherwise described. As shown in FIG. 10B, in the target T3, a portion of the side of the projecting portion was inclined to the projecting direction of the projecting portion at an inclination angle of 3°. The projection length of the projecting portion was 5 mm, and the width of the foot of the projecting portion was 4.7 mm. In the target T3, the projecting portions adjacent to each other were coupled by the coupling portion. As shown in FIG. 10B, the projection length of the coupling portion was 2.5 mm, and the width of the coupling portion was 1.5 mm.

The worst value of the transmission attenuation for the computation model including the target T2 was 15 dB.

[Transmission attenuation]

A radio wave having frequencies of 70 to 90 GHz was allowed to be incident on the first surface of each of samples according to Reference Examples to measure a transmission attenuation in a straight direction using a radio transceiver EAS02 manufactured by KEYCOM Corporation with reference to JIS R 1679: 2007. In this measurement, the measurement region had a diameter of 30 mm. The transmission attenuation was determined by the above equation (8). Table 2 shows the results. Table 2 also shows a decrease in transmittance, the decrease being determined by the following equation (8).

Decrease [%] in transmittance = Transmittance [%] of ratio wave through void-free sample according to Reference Example - Transmittance [%] of radio wave through sample with voids      Equation (8)

<Reference Example 1-1>

A plate-shaped resin molded article having two principal surfaces was obtained by molding using an olefin-based thermoplastic elastomer (TPO). One principal surface included protrusions projecting from a flat-plate-shaped base, and the other principal surface was flat. A sample according to Reference Example 1-1 was obtained in this manner. The real part $\varepsilon'$ of the complex relative permittivity of the olefin-based thermoplastic elastomer at a frequency of 76.5 GHz was 2.43. In the sample according to Reference Example 1-1, the one principal surface including the protrusions was formed as the first surface, while the other principal surface was formed as the second surface. Each protrusion was formed in the shape of a square prism. Each protrusion had a projection length of 5 mm. In plan view of the first surface, the protrusions were arranged to make a parallelogram lattice, each protrusion had a width of 5 mm, and a distance between the protrusions adjacent to each other was 6.5 mm.
In the sample according to Reference Example 1-1, a spherical void having a diameter of 1 mm in a cross-section of the protrusion was formed inside the protrusion, the cross-section including the central axis of the protrusion. A ratio of the volume of the void in the protrusion to the volume of the protrusion was 0.4%. This void was simulatively formed by making a hole between the base and the protrusion using a soldering iron in order to study the effect of voids on the transmission attenuation in the straight direction.

<Reference Example 1-2>

A sample according to Reference Example 1-2 was produced in the same manner as in Reference Example 1-1, except for the following points. In the sample according to Reference Example 1-2, a spherical void having a diameter of 2 mm in a cross-section of the protrusion was simulatively formed inside the protrusion, the cross-section including the central axis of the protrusion. The ratio of the volume of the void in the protrusion to the volume of the protrusion was 3%.

<Reference Example 1-3>

A sample according to Reference Example 1-3 was produced in the same manner as in Reference Example 1-1, except for the following points. In the sample according to Reference Example 1-3, a spherical void having a diameter of 3 mm in a cross-section of the protrusion was simulatively formed inside the protrusion, the cross-section including the central axis of the protrusion. The ratio of the volume of the void in the protrusion to the volume of the protrusion was 11%.

<Reference Example 1-4>

A sample according to Reference Example 1-4 was produced in the same manner as in Reference Example 1-1, except for the following points. In the sample according to Reference Example 1-4, a spherical void having a diameter of 4 mm in a cross-section of the protrusion was simulatively formed inside the protrusion, the cross-section including the central axis of the protrusion. The ratio of the volume of the void in the protrusion to the volume of the protrusion was 27%.

<Reference Example 1-5>

A sample according to Reference Example 1-5 produced in the same manner as in Reference Example 1-1 except that no void was formed in the protrusion was obtained.

<Reference Example 2-1>

A sample according to Reference Example 2-1 was produced in the same manner as in Reference Example 1-1, except for the following points. In the sample according to Reference Example 2-1, each protrusion had a projection length of 4.8 mm. In plan view of the first surface, the protrusions were arranged to make a parallelogram lattice, each protrusion had a width of 9.5 mm, and the distance between the protrusions adjacent to each other was 4 mm. In the sample according to Reference Example 2-1, a spherical void having a diameter of 3 mm in a cross-section of the protrusion was simultatively formed inside the protrusion, the cross-section including the central axis of the protrusion. The ratio of the volume of the void in the protrusion to the volume of the protrusion was 3.3%.

<Reference Example 2-2>

A sample according to Reference Example 2-2 was produced in the same manner as in Reference Example 2-1, except for the following points. In the sample according to Reference Example 2-2, a hemispherical void having a diameter of 6 mm in a cross-section of the protrusion was simultatively formed inside the protrusion, the cross-section including the central axis of the protrusion. The ratio of the volume of the void in the protrusion to the volume of the protrusion was 13%.

<Reference Example 2-3>

A sample according to Reference Example 2-3 was produced in the same manner as in Reference Example 2-1, except for the following points. In the sample according to Reference Example 2-3, a hemispherical void having a diameter of 8 mm in a cross-section of the protrusion was formed inside the protrusion, the cross-section including the central axis of the protrusion. The ratio of the volume of the void in the protrusion to the volume of the protrusion was 31%.

<Reference Example 2-4>

A sample according to Reference Example 2-4 produced in the same manner as in Reference Example 2-1 except that no void was formed in the protrusion was obtained.

<Reference Example 3-1>

A sample according to Reference Example 3-1 was produced in the same manner as in Reference Example 1-1, except for the following points. Each protrusion was formed in the shape of a hemisphere. Each protrusion had a projection length of 4.75 mm. In plan view of the first surface, the protrusions were arranged to make a parallelogram lattice, each protrusion had a width of 9.5 mm, and the distance between the protrusions adjacent to each other was 4 mm. In the sample according to Reference Example 3-1, a spherical void having a diameter of 2 mm in a cross-section of the protrusion was simultatively formed inside the protrusion, the cross-section including the central axis of the protrusion. The ratio of the volume of the void in the protrusion to the volume of the protrusion was 1.9%.

<Reference Example 3-2>

A sample according to Reference Example 3-2 was produced in the same manner as in Reference Example 3-1, except for the following points. Polypropylene (PP) was used instead of the olefin-based thermoplastic elastomer. The real part $\varepsilon'$ of the complex relative permittivity of the PP at a frequency of 76.5 GHz was 2.3. In the sample according to Reference Example 3-2, a spherical void having a diameter of 3.5 mm in a cross-section of the protrusion was simultatively formed inside the protrusion, the cross-section including the central axis of the protrusion. The ratio of the volume of the void in the protrusion to the volume of the protrusion was 10%.

<Reference Example 3-3>

A sample according to Reference Example 3-3 was produced in the same manner as in Reference Example 3-1, except for the following points. PP was used instead of the olefin-based thermoplastic elastomer. The real part $\varepsilon'$ of the complex relative permittivity of the PP at a frequency of 76.5 GHz was 2.3. In the sample according to Reference Example 3-3, a spherical void having a diameter of 4.5 mm in a cross-section of the protrusion was simultatively formed inside the protrusion, the cross-section including the central axis of the protrusion. The ratio of the volume of the void in the protrusion to the volume of the protrusion was 21%.

<Reference Example 3-4>

A sample according to Reference Example 3-3 produced in the same manner as in Reference Example 3-1 except that no void was formed in the protrusion was obtained.

<Reference Example 4-1>

A plate-shaped resin molded article having two principal surfaces was obtained by molding using a mixture of PP and carbon black (CB). One principal surface included projecting strips projecting from a flat-plate-shaped base, and the other principal surface was flat. A sample according to Reference Example 4-1 was obtained in this manner. The real part $\varepsilon'$ of the complex relative permittivity of the mixture of the PP and the carbon black at a frequency of 76.5 GHz was 3.1. In the sample according to Reference Example 4-1, each of the projecting strips extended linearly, and the projecting strips were arranged parallel to each other. The projecting strip had a projection length of 3 mm and a width of 4 mm. A distance between the projecting strips adjacent to each other was 4 mm.

In the sample according to Reference Example 4-1, a cylindrical void having a diameter of 1 mm along a longitudinal direction of the projecting strip was simulatively formed inside the projecting strip. The ratio of the volume of the void in the projecting strip to the volume of the projecting strip was 7%.

<Reference Example 4-2>

A sample according to Reference Example 4-2 was produced in the same manner as in Reference Example 4-1, except for the following points. In the sample according to Reference Example 4-2, a cylindrical void having a diameter of 2.5 mm along the longitudinal direction of the projecting strip was simulatively formed inside the projecting strip. The ratio of the volume of the void in the projecting strip to the volume of the projecting strip was 41%.

<Reference Example 4-3>

A sample according to Reference Example 4-3 produced in the same manner as in Reference Example 4-1 except that no void was formed in the projecting strip was obtained.

As shown in Table 2, decrease rates of the transmission attenuations of the samples according to Reference Examples 1-1, 1-2, 1-3, 2-1, 2-2, 3-1, 3-2, and 4-1 in the straight direction were low; the samples according to these Reference Examples exhibited transmission attenuation performances close to those of their corresponding void-free samples according to Reference Examples. On the other hand, the decrease rates of the transmission attenuations of the samples according to Reference Examples 1-4, 2-3, 3-3, and 4-2 in the straight direction were high; it is difficult to say that the samples according to these Reference Examples exhibited transmission attenuation performances close to the transmission attenuation performances of their corresponding void-free samples according to Reference Examples. These indicate that an advantageous ratio of the volume of the void to the volume of the protrusion or the projecting strip is 20% or less in terms of transmission attenuation performance.

[Table 2]

| | Material | Protrusion or projecting strip | | | | Void | | Ratio [%] of volume of void to volume of protrusion or projecting strip | Ratio of diameter Dvto width W | Transmission attenuation [dB] in straight direction | Decreaserate [%] of transmission attenuation |
|---|---|---|---|---|---|---|---|---|---|---|---|
| | | Shape | Width W [mm] | Projection length P [mm] | Distance D [mm] | Shape | Diameter Dv | | | | |
| Ref. Ex. 1-1 | TPO | Quadrilateral prism | 5 | 5 | 6.5 | Spherical | 1 | 0.4 | 0.20 | 18 | -0.6 |
| Ref. Ex. 1-2 | TPO | Quadrilateral prism | 5 | 5 | 6.5 | Spherical | 2 | 3 | 0.40 | 18 | -0.6 |
| Ref. Ex. 1-3 | TPO | Quadrilateral prism | 5 | 5 | 6.5 | Spherical | 3 | 11 | 0.60 | 19 | -0.3 |
| Ref. Ex. 1-4 | TPO | Quadrilateral prism | 5 | 5 | 6.5 | Spherical | 4 | 27 | 0.80 | 16 | -1.5 |
| Ref. Ex. 1-5 | TPO | Quadrilateral prism | 5 | 5 | 6.5 | N/A | - | 0 | - | 20 | - |
| Ref. Ex. 2-1 | TPO | Quadrilateral prism | 9.5 | 4.8 | 4 | Spherical | 3 | 3.3 | 0.32 | 11 | 0 |
| Ref. Ex. 2-2 | TPO | Quadrilateral prism | 9.5 | 4.8 | 4 | Hemispherical | 6 | 13 | 0.63 | 11 | 0 |
| Ref. Ex. 2-3 | TPO | Quadrilateral prism | 9.5 | 4.8 | 4 | Hemispherical | 8 | 31 | 0.84 | 6 | -17 |

| | Material | Protrusion or projecting strip | | | | Void | | Ratio [%] of volume of void to volume of protrusion or projecting strip | Ratio of diameter Dv to width W | Transmission attenuation [dB] in straight direction | Decrease rate [%] of transmission attenuation |
| | | Shape | Width W [mm] | Projection length P [mm] | Distance D [mm] | Shape | Diameter Dv | | | | |
|---|---|---|---|---|---|---|---|---|---|---|---|
| Ref. Ex. 2-4 | TPO | Quadrilateral prism | 9.5 | 4.8 | 4 | N/A | - | 0 | - | 11 | - |
| Ref. Ex. 3-1 | TPO | Hemispherical | 9.5 | 4.75 | 4 | Spherical | 2 | 1.9 | 0.21 | 11 | 0 |
| Ref. Ex. 3-2 | PP | Hemispherical | 9.5 | 4.75 | 4 | Spherical | 3.5 | 10 | 0.37 | 11 | -0.5 |
| Ref. Ex. 3-3 | PP | Hemispherical | 9.5 | 4.75 | 4 | Spherical | 4.5 | 21 | 0.47 | 7 | -12 |
| Ref. Ex. 3-4 | TPO | Hemispherical | 9.5 | 4.75 | 4 | N/A | - | 0 | - | 11 | - |
| Ref. Ex. 4-1 | PP + CB | Projecting strip | 4 | 3 | 4 | Cylindrical | 1 | 7 | 0.25 | 26 | -0.05 |
| Ref. Ex. 4-2 | PP + CB | Projecting strip | 4 | 3 | 4 | Cylindrical | 2.5 | 41 | 0.63 | 15 | -3.0 |
| Ref. Ex. 4-3 | PP + CB | Projecting strip | 4 | 3 | 4 | N/A | - | 0 | - | 27 | - |

**Claims**

1. An electromagnetic shield comprising:

   a plate-shaped base having a first surface and a second surface, the first surface being configured to allow an electromagnetic wave to be incident on the first surface, the second surface being distant from the first surface and extending along the first surface; and
   at least one selected from the group consisting of a plurality of first projecting portions projecting from the first surface in a direction away from the second surface and a plurality of second projecting portions projecting from the second surface in a direction away from the first surface, wherein
   the electromagnetic shield includes a dielectric, and
   at least one selected from the group consisting of the following requirements (I-1), (I-2), (II-1), (II-2), (III-1), and (III-2) is satisfied:

   (I-1) at least one of the first projecting portions has a side including a first point and a second point, the side makes different inclination angles with a projecting direction of the first projecting portion at the first point and the second point, the second point is closer to the first surface in the projecting direction of the first projecting portion than the first point is, and the inclination angle at the second point is greater than the inclination angle at the first point;
   (I-2) at least one of the second projecting portions has a side including a third point and a fourth point, the side makes different inclination angles with a projecting direction of the second projecting portion at the third point and the fourth point, the fourth point is closer to the second surface in the projecting direction of the second projecting portion than the third point is, and the inclination angle at the fourth point is greater than the inclination angle at the third point;
   (II-1) the electromagnetic shield further includes a first coupling portion coupling at least a pair of the first projecting portions adjacent to each other, and a width $d_{1i}$ of the first coupling portion is smaller than a width $w_{1i}$ of the first projecting portion coupled by the first coupling portion, the first coupling portion projecting from the first surface in the direction away from the second surface;
   (II-2) the electromagnetic shield further includes a second coupling portion coupling at least a pair of the second projecting portions adjacent to each other, and a width $d_{2i}$ of the second coupling portion is smaller than a width $w_{2i}$ of the second projecting portion coupled by the second coupling portion, the second coupling portion projecting from the second surface in the direction away from the first surface;
   (III-1) at least one of the first projecting portions has a first auxiliary projecting portion projecting from a surface of the first projecting portion; and
   (III-2) at least one of the second projecting portions has a second auxiliary projecting portion projecting from a surface of the second projecting portion.

2. The electromagnetic shield according to claim 1, wherein

   at least one selected from the group consisting of the requirements (I-1) and (I-2) is satisfied, and
   at least one selected from the group consisting of the side of the first projecting portion and the side of the second projecting portion has a curvature radius of 1 to 3 mm, the sides respectively including the second point and the fourth point.

3. The electromagnetic shield according to claim 1, wherein

   at least one selected from the group consisting of the requirements (II-1) and (II-2) is satisfied, and
   at least one selected from the group consisting of a ratio of the width $d_{1i}$ to the width $w_{1i}$ and a ratio of the width $d_{2i}$ to the width $w_{2i}$ is 0.1 to 0.6.

4. The electromagnetic shield according to claim 1, wherein

   at least one selected from the group consisting of the requirements (III-1) and (III-2) is satisfied,
   at least one auxiliary projecting portion selected from the group consisting of the first auxiliary projecting portion and the second auxiliary projecting portion projects from the side of the first projecting portion or the side of the second projecting portion, and
   when the first surface or the second surface is viewed in plan, the at least one auxiliary projecting portion is perpendicular to a projecting direction of the first auxiliary projecting portion or the second auxiliary projecting portion and has an outer shape abutting on a pair of straight lines intersecting with a first straight line extending along a root of the first auxiliary projecting portion or the second auxiliary projecting portion, the pair of straight lines making a pair of acute angles with the first straight line at both ends of the root.

5. The electromagnetic shield according to any one of claims 1 to 4, wherein the electromagnetic shield is free of an electrically conductive portion.

6. The electromagnetic shield according to any one of claims 1 to 5, wherein an imaginary part $\varepsilon''$ of a relative permittivity of the dielectric at at least one frequency in a range of 10 GHz to 300 GHz is 0.1 or less.

7. The electromagnetic shield according to any one of claims 1 to 6, wherein a real part $\varepsilon'$ of a relative permittivity of the dielectric at at least one frequency in a range of 10 GHz to 300 GHz is 2.0 to 4.0.

8. The electromagnetic shield according to any one of claims 1 to 7, wherein

   the electromagnetic shield is capable of shielding against an electromagnetic wave with a wavelength $\lambda$, and at least one selected from the group consisting of a projection length $p_{1i}$ of at least one of the first projecting portions and a projection length $p_{2i}$ of at least one of the second projecting portions satisfies at least one selected from the group consisting of $0.25\lambda \leq p_{1i} \leq 1.3\lambda$ and $0.25\lambda \leq p_{2i} \leq 1.3\lambda$.

9. The electromagnetic shield according to any one of claims 1 to 8, wherein

   the electromagnetic shield is capable of shielding against an electromagnetic wave with a wavelength $\lambda$, and at least one selected from the group consisting of a width $w_{1i}$ of at least one of the first projecting portions and a width $w_{2i}$ of at least one of the second projecting portions satisfies at least one selected from the group consisting of $0.51\lambda \leq w_{1i} \leq 1.6\lambda$ and $0.51\lambda \leq w_{2i} \leq 1.6\lambda$.

10. The electromagnetic shield according to any one of claims 1 to 9, wherein

    the electromagnetic shield is capable of shielding against an electromagnetic wave with a wavelength $\lambda$, and at least one selected from the group consisting of an interval in between the first projecting portions and an interval $i_{2i}$ between the second projecting portions satisfies at least one selected from the group consisting of $0.51\lambda \leq i_{1i} \leq 1.6\lambda$ and $0.51\lambda \leq i_{2i} \leq 1.6\lambda$.

11. The electromagnetic shield according to any one of claims 1 to 10, wherein an outer shape of at least one selected from the group consisting of the first projecting portion and the second projecting portion is, in plan view, at least one selected from the group consisting of a circle, a triangle, a quadrilateral, and a polygon having five or more corners.

12. The electromagnetic shield according to any one of claims 1 to 11, wherein at least one selected from the group consisting of arrangement of the first projecting portions and arrangement of the second projecting portions is at least one selected from the group consisting of arrangement at lattice points, arrangement on parallel lines, and random arrangement in plan view.

13. The electromagnetic shield according to any one of claims 1 to 12, wherein

    the electromagnetic shield satisfies at least one selected from the group consisting of the following requirements (A-1) and (A-2):

    $$0.2 \leq Sp/Se \leq 0.8 \qquad (A-1);$$

    and

    $$0.2 \leq Sp/So \leq 0.8 \qquad (A-2),$$

    where
    Sp is a total area of the plurality of first projecting portions or the plurality of second projecting portions measured when the first surface or the second surface is viewed in plan,
Se is an area of the entire electromagnetic shield measured when the first surface is viewed in plan, and
So is an area of the entire electromagnetic shield measured when the second surface is viewed in plan.

14. The electromagnetic shield according to any one of claims 1 to 13, wherein

at least one selected from the group consisting of the electromagnetic shield and the base is a ring-shaped body and has a polygonal or circular outer perimeter when the first surface is viewed along an axis of the ring-shaped body,
the electromagnetic shield further includes a contact portion configured to be in contact with a component other than the electromagnetic shield, and
the contact portion abuts on the outer perimeter.

15. The electromagnetic shield according to any one of claims 1 to 14, wherein

at least one selected from the group consisting of the electromagnetic shield and the base is a hollow body whose outer shape is a truncated pyramidal shape, a truncated conical shape, or a truncated elliptical conical shape and which has an opening in each of positions in the outer shape, the positions corresponding to an upper base and a lower base of a truncated pyramid, a truncated cone, or a truncated elliptic cone,
the first surface is an inner side surface of the hollow body being the electromagnetic shield or the base, and
the second surface is an outer side surface of the hollow body being the electromagnetic shield or the base.

16. The electromagnetic shield according to claim 15, wherein at least one selected from the group consisting of the plurality of first projecting portions and the plurality of second projecting portions projects in a direction perpendicular to the lower base.

17. An electromagnetic shield comprising:

a first surface configured to allow an electromagnetic wave to be incident on the first surface,
a second surface being distant from the first surface and extending along the first surface; and
at least one selected from the group consisting of a plurality of first projecting portions projecting from the first surface in a direction away from the second surface and a plurality of second projecting portions projecting from the second surface in a direction away from the first surface, wherein
the electromagnetic shield includes a dielectric, and
a ratio of a volume of a void in the first projecting portion or the second projecting portion to a volume of the first projecting portion or the second projecting portion is 20% or less.

FIG.1A

FIG.1B

FIG.1C

FIG. 2A

**FIG.2B**

**FIG.3A**

FIG.3B

FIG.3C

FIG.4A

FIG.4B

FIG.5

FIG. 6A

FIG. 6B

Number of 3D meshes : 2, 568, 342

M3

FIG. 6C

Number of 3D meshes : 2, 003, 396

M4

FIG. 6D

Number of 3D meshes : 2, 039, 339

FIG. 6E

FIG. 6F

16.3% > 15.8%
16.1% > 15.5%
15.4% > 14.8%
14.5% > 14.0%
13.7% > 13.4%

FIG. 7A

A:15.0%    B:16.8%

FIG. 7B

A:14.4%    B:16.6%

FIG. 7C

FIG.8A

FIG.8B

FIG.8C

11mm

FIG.8D

L2

L2

2.35mm

2.35mm

L1

C

FIG.8E

T2

Z

X          Y

FIG.9A

T2

Z ⊙→Y

X

0          20          40 (mm)

## FIG.9B

T2

Z ↑ ⊙→Y

X

0     10     20 (mm)

## FIG.9C

FIG.9D

FIG.10A

3°

T3

2.5mm

5mm

1.5mm

4.7mm

# FIG.10B

**INTERNATIONAL SEARCH REPORT**

International application No.

**PCT/JP2022/028282**

| A. | CLASSIFICATION OF SUBJECT MATTER |
|---|---|

*G01S 7/03*(2006.01)i; *H01Q 17/00*(2006.01)i; *H05K 9/00*(2006.01)i; *G01S 13/931*(2020.01)n
FI:    G01S7/03 230; H01Q17/00; H05K9/00 M; G01S13/931

According to International Patent Classification (IPC) or to both national classification and IPC

| B. | FIELDS SEARCHED |
|---|---|

Minimum documentation searched (classification system followed by classification symbols)

G01S 7/00 - G01S 7/42; G01S 13/00 - G01S 13/95; H01Q 15/00 - H01Q 19/32; H05K 9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2000-353610 A (TEN KK) 19 December 2000 (2000-12-19) paragraphs [0008]-[0015], fig. 5-9 | 1-3, 11-13, 15-16 |
| A | | 4-10, 14, 17 |
| A | JP 2007-67395 A (TDK CORP) 15 March 2007 (2007-03-15) entire text, all drawings | 1-17 |
| A | JP 2020-9923 A (SHINETSU POLYMER CO) 16 January 2020 (2020-01-16) entire text, all drawings | 1-17 |
| A | JP 2014-232842 A (SANWA PACKING KOGYO CO LTD) 11 December 2014 (2014-12-11) entire text, all drawings | 1-17 |
| A | JP 2008-4943 A (INTERNATIONAL BUSINESS MACHINES CORPORATION) 10 January 2008 (2008-01-10) entire text, all drawings | 1-17 |
| A | JP 49-18453 A (FURUKAWA ELECTRIC CO LTD) 18 February 1974 (1974-02-18) entire text, all drawings | 1-17 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/028282**

**C.** **DOCUMENTS CONSIDERED TO BE RELEVANT**

| Category* | Citation of document, with indication, where appropriate, of the relevant passages | Relevant to claim No. |
|---|---|---|
| A | US 4164718 A (CALIFORNIA INSTITUTE OF TECHNOLOGY) 14 August 1979 (1979-08-14)<br>entire text, all drawings | 1-17 |

Form PCT/ISA/210 (second sheet) (January 2015)

<table>
<tr><td align="center">**INTERNATIONAL SEARCH REPORT**</td><td>International application No.<br><br>**PCT/JP2022/028282**</td></tr>
</table>

| Box No. III | Observations where unity of invention is lacking (Continuation of item 3 of first sheet) |
|---|---|

This International Searching Authority found multiple inventions in this international application, as follows:

(Invention 1) Claims 1-16
Document 1 (JP 2000-353610 A) discloses features (paragraphs [0008]-[0015], fig. 5-9) of a wave absorber (paragraph [0008]), wherein
- a wave absorber 11
-- is constituted by a plurality of hollow bodies 13 in the form of a cuboid, pyramid, or cone having a curved shape in which the widths in mutual perpendicular directions at respective intersections increase gradually from the top portion toward the base portion (paragraphs [0010], [0012]-[0014], fig. 5-9), and
-- wherein the plurality of hollow bodies 13 are spaced at small distances from each other in the row and column directions and perpendicularly arranged in the form of a cuboidal frame, and an intermediate portion is connected to a base portion of each of the hollow bodies 13 by a rib 15, thereby forming a dielectric layer that absorbs, by using a dielectric loss, electric waves incident to the inside (a hollow body portion 13a) (paragraphs [0012]-[0013], fig. 6-9),
- wherein a metal reflective plate can be mounted to the base portion (paragraph [0015]), and
Accordingly, claims 1-3 lack novelty in light of document 1, and thus do not have a special technical feature.
However, claim 4 dependent on claim 1 has the special technical feature in which "at least one of protrusion portions has a sub protrusion portion that protrudes from the surface of the protrusion portion," and claims 5-16 also have the same technical feature as claim 4.
Thus, claims 1-16 are classified as invention 1.

(Invention 2) Claim 17
It cannot be said that claim 17 has a technical feature identical or corresponding to that of claim 4 classified as invention 1.
Also, claim 17 is not substantially identical to or similarly closely related to any of the claims classified as invention 1.
Thus, claim 17 cannot be classified as invention 1.
Also, claim 17 has the special technical feature in which "a ratio of the volume of voids present inside a protrusion portion to the volume of the protrusion portion is less than or equal to 20%," and is thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

Form PCT/ISA/210 (patent family annex) (January 2015)

**INTERNATIONAL SEARCH REPORT**
Information on patent family members

International application No.

**PCT/JP2022/028282**

| Patent document cited in search report | | | Publication date (day/month/year) | Patent family member(s) | | | Publication date (day/month/year) |
|---|---|---|---|---|---|---|---|
| JP | 2000-353610 | A | 19 December 2000 | (Family: none) | | | |
| JP | 2007-67395 | A | 15 March 2007 | US | 2007/0030194 | A1 | |
| | | | | CN | 1909774 | A | |
| JP | 2020-9923 | A | 16 January 2020 | (Family: none) | | | |
| JP | 2014-232842 | A | 11 December 2014 | (Family: none) | | | |
| JP | 2008-4943 | A | 10 January 2008 | US | 2007/0297159 | A1 | |
| | | | | CN | 101093408 | A | |
| JP | 49-18453 | A | 18 February 1974 | (Family: none) | | | |
| US | 4164718 | A | 14 August 1979 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004153135 A
- JP 5696781 B
- US 10074907 B2
- WO 2021058450 A1